# EUROPEAN PATENT APPLICATION

(11) **EP 3 741 764 A1**
(43) Date of publication of application: **25.11.2020**
(21) Application number: 19741512.8
(22) Date of filing: 17.01.2019
(51) Int. Cl.: C07F 5/04, C07F 5/02

(54) **SYNTHESIS METHOD FOR BORONIC ACID ESTER COMPOUND, AND SODIUM SALT OF BORONIC ACID ESTER COMPOUND AND SYNTHESIS METHOD THEREFOR**

(30) Priority: 17.01.2018 JP 2018005719
(71) Applicant: Kobelco Eco-Solutions Co., Ltd, Kobe-shi, Hyogo 651-0072 (JP); National University Corporation Okayama University, Kita-ku Okayama-shi Okayama 700-8530 (JP)
(72) Inventor: MURAKAMI, Yoshiaki, Kobe-shi, Hyogo 651-2241 (JP); FUKUSHIMA, Miyuki, Kobe-shi, Hyogo 651-2241 (JP); TAKAI, Kazuhiko, Okayama-shi, Okayama 700-8530 (JP); ASAKO, Sobi, Okayama-shi, Okayama 700-8530 (JP)
(74) Representative: Winter, Brandl, Fürniss, Hübner, Röss, Kaiser, Polte - Partnerschaft mbB
(86) International application number: PCT/JP2019/001235
(87) International publication number: WO 2019/142854

(57) **Abstract**

An object is to establish a technology with which a boronate ester compound can be easily and efficiently synthesized at a low cost with a small number of steps without the need for a complex chemical method and reagents that need to be carefully handled. A further object is to establish a sodium salt of a boronate ester compound that is a novel compound and a technology for synthesizing the sodium salt of a boronate ester compound. Provided are a sodium salt of a boronate ester compound and a method for synthesizing a boronate ester compound or a sodium salt of a boronate ester compound that includes reacting, in a reaction solvent, an organic chloride with a dispersion product obtained by dispersing sodium in a dispersion solvent to obtain an organic sodium compound, and reacting the obtained organic sodium compound with a borate ester compound to obtain a boronate ester compound or a sodium salt of a boronate ester compound.

## Description

### Technical Field

The present invention relates to a method for synthesizing a boronate ester compound, a sodium salt of a boronate ester compound, and a method for synthesizing a sodium salt of a boronate ester compound.

### Background Art

Organic boron compounds such as boronate ester compounds are used for natural product total synthesis and organic synthesis reactions of various functional materials such as medicines, agricultural chemicals, electronic materials such as liquid crystal and organic EL, and intermediate products thereof, for example. In particular, organic boronic acid compounds are often used as substrates in Suzuki-Miyaura cross coupling in which coupling is performed by forming carbon-carbon bonds in the presence of a palladium catalyst, and Richard F. Heck, Ei-ichi Negishi, and Akira Suzuki were awarded the 2010 Nobel Prize in Chemistry.

As described in Non-Patent Document 1, a boronate ester compound can be obtained by preparing a corresponding Grignard reagent or organic lithium reagent from an organic halide and reacting the reagent with a borate ester compound. Also, a method for reacting an organometallic compound with a borate ester compound, a method for reacting an organic halide with diboronic acid or the like in the presence of a palladium catalyst as described in Non-Patent Documents 2 and 3, and directly synthesizing an aromatic boronic acid compound through activation of carbon-hydrogen bonds by using an iridium catalyst and an electron donating bidentate ligand as described in Non-Patent Document 4 are known. However, methods in which a Grignard reagent or an organic lithium reagent is used are widely used for reasons such as diboronic acid, the palladium catalyst, and the iridium catalyst being expensive reagents.
Non-Patent Document 1: Miyaura, N. et al, Chem. Rev. 1995, 95, 2457-2483
Non-Patent Document 2: Yamamoto, T. et al, ORGANIC LETTERS 2011, Vol. 13, No. 21, 5766-5769
Non-Patent Document 3: Harrisson, P. et al, Synlett 2009, No. 1, 147-150
Non-Patent Document 4: Mkhalid, I. A. I. et al, Chem. Rev. 2010, 110, 890-931

### Disclosure of the Invention

### Problem to be Solved by the Invention

Here, a Grignard reagent that is used in a synthesis process for a boronate ester compound is obtained by reacting an organic halide with magnesium metal in an anhydrous solvent such as tetrahydrofuran (hereinafter referred to as "THF") or ether. Generally, organic bromides (R-Br) and organic iodides (R-I) have higher reactivity than organic chlorides (R-Cl) in the synthesis of a Grignard reagent, but organic bromides and organic iodides are expensive. On the other hand, organic chlorides are inexpensive when compared to other organic halides, but have low reactivity in the synthesis, and accordingly are likely to reduce the yield of a Grignard reagent to be obtained. In particular, in the synthesis of an aromatic Grignard reagent, an alkenyl Grignard reagent, and the like, the Grignard reagent to be obtained cannot be synthesized with a high yield, and it is also known that the yield is affected by substituents on an aromatic ring and the like. Also, there is a problem in that in the preparation of a Grignard reagent, such as an aromatic Grignard reagent, which is likely to cause homocoupling, strict temperature control and the like need to be performed to suppress the occurrence of homocoupling that causes a reduction in the yield. Therefore, methods in which a Grignard reagent is used in a synthesis process for a boronate ester compound cannot sufficiently satisfy market requirements from industrial and economic standpoints. Also, an organic magnesium bromide, which is widely used as a Grignard reagent from the standpoint of reactivity, is a bromine-containing compound, but use of bromine is decreasing because bromine is mined in limited regions, has strong toxicity, and remains in the human body, for example. Accordingly, the distribution amount is reduced, causing a problem in that obtaining a desired organic bromide is likely to be difficult.

An organic lithium reagent that is used in a synthesis process for a boronate ester compound is obtained through a lithium-halogen exchange reaction by causing n-butyl lithium (hereinafter abbreviated as "nBuLi") or t-butyl lithium (hereinafter abbreviated as "tBuLi") to act on an organic halide such as an organic iodide. However, there is a problem in that nBuLi and tBuLi are expensive reagents and increase cost, for example. Furthermore, there is a problem in that nBuLi and tBuLi are designated as hazardous materials of Type 3 under the Fire Service Act, and therefore an apparatus, equipment, or the like that is suitable for handling these reagents is necessary.

Also, there is a problem in that Grignard reagents and organic lithium reagents have high reactivity, and accordingly further react with a produced boronate ester compound and produce a boronate ester compound, triarylborane, or the like as a byproduct.

Therefore, there has been demand for establishing a technology with which a boronate ester compound can be easily and efficiently synthesized at a low cost with a small number of steps without the need for a complex chemical method or reagents that need to be carefully handled.

### Means for Solving Problem

Inventors of the present invention conducted studies to solve the above-described problems, and found that a boronate ester compound can be efficiently synthesized by reacting, in a reaction solvent, an organic halide with a dispersion product obtained by dispersing sodium in a dispersion solvent to obtain an organic sodium compound, and then reacting the obtained organic sodium compound with a borate ester compound. In the synthesis method, a dispersion product that is obtained by dispersing sodium in a dispersion solvent and can be easily handled is used, and accordingly, a boronate ester compound can be synthesized under moderate conditions. Furthermore, the boronate ester compound can be synthesized with a high yield at a low cost with a small number of steps by using reagents that can be easily obtained and handled, without the need for a complex chemical method and reagents that need to be carefully handled. The inventors of the present invention completed the present invention based on these findings.

That is, the present invention is a method for synthesizing a boronate ester compound and has a characteristic configuration in which the synthesis method includes:
reacting, in a reaction solvent, an organic halide represented by General Formula I (R¹-X), where R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, and X is a halogen atom, with a dispersion product obtained by dispersing sodium in a dispersion solvent to obtain an organic sodium compound represented by General Formula II (R¹-Na), where R¹ is the same as R¹ in General Formula I; and
reacting the obtained organic sodium compound with a borate ester compound represented by General Formula III, 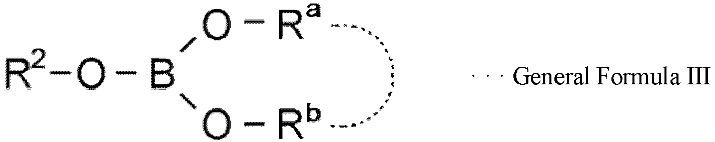 where R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, R^{a} and R^{b} are each, independently of each other, an aliphatic hydrocarbon group or an aromatic hydrocarbon group, which optionally includes a substituent that does not react with sodium, and R^{a} and R^{b} are optionally bonded to each other forming a ring together with a boron atom, to obtain a boronate ester compound represented by General Formula IV, 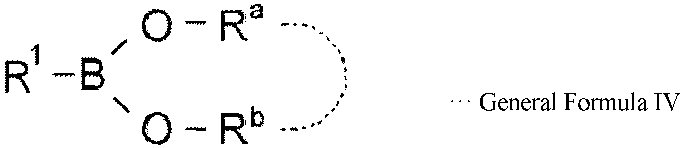 where R¹ is the same as R¹ in General Formula I, and R^{a} and R^{b} are the same as those in

### General Formula III.

According to this configuration, it is possible to provide a method for synthesizing a boronate ester compound with which a boronate ester compound can be stably and efficiently synthesized from an organic halide through the synthesis of an organic sodium compound. According to this configuration, a dispersion product that is obtained by dispersing sodium in a dispersion solvent and can be easily handled is used, and therefore a boronate ester compound can be easily synthesized at a low cost in a short time with a small number of steps under moderate conditions without the need for a complex chemical method, and therefore this configuration is extremely advantageous from economic and industrial standpoints. Furthermore, the reaction progresses under moderate conditions, and therefore the organic sodium compound can be efficiently obtained without the occurrence of a side reaction, such as a Wurtz reaction in which organic halides are coupled to each other, and consequently the boronate ester compound can be synthesized with a high yield and high purity. Furthermore, sodium is extremely widely distributed on the earth, and therefore this technology has excellent sustainability. Furthermore, use of an inexpensive organic chloride as a starting compound is economically advantageous and does not pose problems such as localized production areas and low availability, which are problems regarding bromine, which is a raw material of an organic bromide, and also does not pose problems such as the need for waste treatment facilities that pose a large load in industrialization. Furthermore, the boronate ester compound synthesized using the method for synthesizing a boronate ester compound according to this configuration can be favorably used for Suzuki-Miyaura coupling and the like. With regard to a base that is required in Suzuki-Miyaura coupling, sodium alkoxide, which is a byproduct produced in the reaction between the organic sodium compound represented by General Formula II and the borate represented by General Formula III in the method for synthesizing a boronate ester compound according to this configuration can serve as the base required in Suzuki-Miyaura coupling, or if water is added, sodium hydroxide produced in a reaction between water and sodium can serve as the base, and there is no need to separately provide a process for adding the base, and this is advantageous from economic and industrial standpoints. Therefore, the method for synthesizing a boronate ester compound according to this configuration can be used in various technical fields, such as the synthesis of functional materials such as medicines, agricultural chemicals, and electronic materials.

In another characteristic configuration, the borate ester compound is a compound represented by General Formula V below, 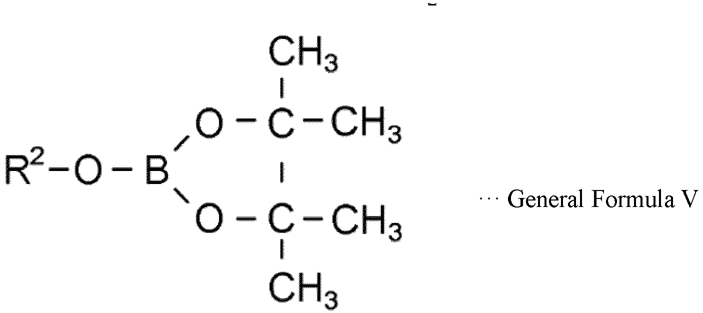 where R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium.

According to this configuration, a boronate ester compound having high purity can be extremely efficiently obtained as a result of a compound having a pinacol ring being used as the borate ester compound, and therefore this configuration is more advantageous from economic and industrial standpoints.

In another characteristic configuration, a molar ratio of the dispersion product obtained by dispersing sodium in a dispersion solvent to the organic halide is at least 2.

According to this configuration, amounts of the organic halide and the dispersion product obtained by dispersing sodium in a dispersion solvent are optimized, and therefore a boronate ester compound can be more efficiently synthesized with high purity.

Another characteristic configuration provides a sodium salt of a boronate ester compound represented by General Formula VI, 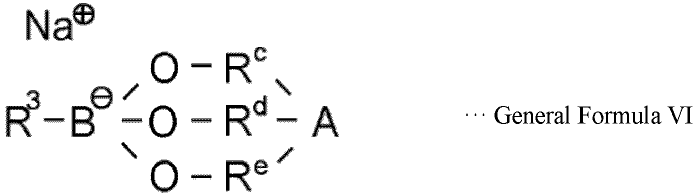 where A is an atom selected from a nitrogen atom, a carbon atom, a silicon atom, and a phosphorus atom, R³ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, R^{c}, R^{d}, and R^{e} are each, independently of each other, an aliphatic hydrocarbon group that optionally includes a substituent that does not react with sodium, and R^{c}, R^{d}, and R^{e} are bonded to the A and a boron atom, forming a ring.

According to this configuration, a sodium salt of a boronate ester compound represented by General Formula VI, which is a novel compound, can be provided. The compound can be used in various technical fields, such as the synthesis of functional materials such as medicines, agricultural chemicals, and electronic materials.

Another characteristic configuration provides a method for synthesizing a sodium salt of a boronate ester compound, including:
reacting, in a reaction solvent, an organic halide represented by General Formula I (R¹-X), where R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, and X is a halogen atom, with a dispersion product obtained by dispersing sodium in a dispersion solvent to obtain an organic sodium compound represented by General Formula II (R¹-Na), where R¹ is the same as R¹ in General Formula I; and
reacting the obtained organic sodium compound with a borate ester compound represented by General Formula VII, 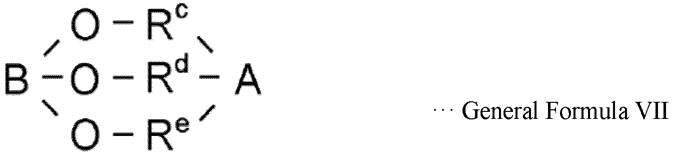 where A is an atom selected from a nitrogen atom, a carbon atom, a silicon atom, and a phosphorus atom, R^{c}, R^{d}, and R^{e} are each, independently of each other, an aliphatic hydrocarbon group that optionally includes a substituent that does not react with sodium, and R^{c}, R^{d}, and R^{e} are bonded to the A and a boron atom, forming a ring, to obtain a sodium salt of a boronate ester compound represented by General Formula VI, 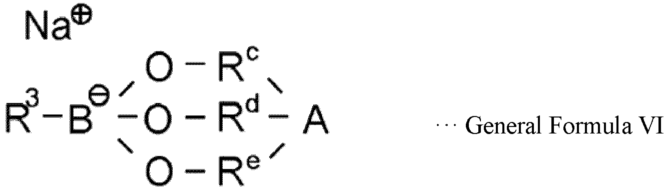 where A is the same as A in General Formula VII, R³ is the same as R¹ in General Formula I, and R^{c}, R^{d}, and R^{e} are the same as R^{c}, R^{d}, and R^{e} in General Formula VII.

According to this configuration, it is possible to provide a method for synthesizing a sodium salt of a boronate ester compound with which a novel sodium salt of a boronate ester compound can be stably synthesized from an organic halide through the synthesis of an organic sodium compound. According to this configuration, a dispersion product that is obtained by dispersing sodium in a dispersion solvent and can be easily handled is used, and therefore a sodium salt of a boronate ester compound can be easily synthesized at a low cost in a short time with a small number of steps under moderate conditions without the need for a complex chemical method, and therefore this configuration is extremely advantageous from economic and industrial standpoints. Furthermore, the reaction progresses under moderate conditions, and therefore the organic sodium compound can be efficiently obtained without the occurrence of a side reaction, such as the Wurtz reaction in which organic halides are coupled to each other, and consequently the novel sodium salt of a boronate ester compound can be synthesized. Furthermore, sodium is extremely widely distributed on the earth, and therefore this technology has excellent sustainability. Furthermore, use of an inexpensive organic chloride as a starting compound is economically advantageous and does not pose problems such as localized production areas and low availability, which are problems regarding bromine, which is a raw material of an organic bromide, and also does not pose problems such as the need for waste treatment facilities that pose a large load in industrialization. Furthermore, the sodium salt of a boronate ester compound synthesized using the method for synthesizing a sodium salt of a boronate ester compound according to this configuration can be favorably used for Suzuki-Miyaura coupling and the like. With regard to a base that is required in Suzuki-Miyaura coupling, the sodium salt of a boronate ester compound produced through the method for synthesizing the sodium salt of a boronate ester compound according to this configuration can serve as the base required in Suzuki-Miyaura coupling, or if water is added, sodium hydroxide produced in a reaction between water and sodium can serve as the base, and there is no need to separately provide a process for adding the base, and this is advantageous from economic and industrial standpoints. Therefore, the method for synthesizing a sodium salt of a boronate ester compound according to this configuration can be used in various technical fields, such as the synthesis of functional materials such as medicines, agricultural chemicals, and electronic materials.

In another characteristic configuration, a molar ratio of the dispersion product obtained by dispersing sodium in a dispersion solvent to the organic halide is at least 2.

According to this configuration, amounts of the organic halide and the dispersion product obtained by dispersing sodium in a dispersion solvent are optimized, and therefore a sodium salt of a boronate ester compound can be more efficiently synthesized with high purity.

### Brief Description of the Drawings

FIG. 1 is a diagram showing a summary of synthesis conditions and results in Example 1 in which the synthesis of a boronate ester compound through a reaction between an organic sodium compound synthesized using an SD and a borate ester compound and Suzuki-Miyaura coupling were investigated.
FIG. 2A is a diagram showing a summary of synthesis conditions and results in Example 2 in which the synthesis of a boronate ester compound through a reaction between an organic sodium compound synthesized using an SD and a borate ester compound and Suzuki-Miyaura coupling were investigated.
FIG. 2B is a diagram showing a summary of synthesis conditions and results in Example 2 in which the synthesis of a boronate ester compound through a reaction between an organic sodium compound synthesized using an SD and a borate ester compound and Suzuki-Miyaura coupling were investigated.
FIG. 3 is a diagram showing a summary of synthesis conditions and results in Example 3 in which the synthesis of a sodium salt of a boronate ester compound through a reaction between an organic sodium compound synthesized using an SD and a borate ester compound and Suzuki-Miyaura coupling were investigated.
FIG. 4 is a diagram showing a summary of synthesis conditions and results in Example 4 in which the synthesis of a boronate ester compound through a reaction between an organic sodium compound synthesized using an SD and a borate ester compound and Suzuki-Miyaura coupling were investigated.
FIG. 5 is a diagram showing a summary of synthesis conditions and results in Example 5 in which the synthesis of a sodium salt of a boronate ester compound through a reaction between an organic sodium compound synthesized using an SD and a borate ester compound was investigated.

### Best Mode for Carrying out the Invention

The following describes a method for synthesizing a boronate ester compound, a sodium salt of a boronate ester compound, and a method for synthesizing of a sodium salt of a boronate ester compound according to an embodiment of the present invention in detail. However, the present invention is not limited to the embodiment described below.

### Method for Synthesizing Boronate Ester Compound

In a method for synthesizing a boronate ester compound according to the present embodiment, an organic halide represented by General Formula I shown below is reacted with a dispersion product obtained by dispersing sodium in a dispersion solvent, in a reaction solvent, to obtain an organic sodium compound represented by General Formula II shown below (step 1). The obtained organic sodium compound is reacted with a borate ester compound represented by General Formula III shown below to obtain a boronate ester compound represented by General Formula IV shown below (step 2).

### Step 1

In step 1, in a reaction solvent, an organic halide represented by General Formula I shown below is reacted with a dispersion product obtained by dispersing sodium in a dispersion solvent to obtain an organic sodium compound represented by General Formula II shown below.

The organic halide according to the present embodiment is an organic compound that includes a covalently bonded halogen atom and is a starting compound of a method for synthesizing an organic boron compound according to the present embodiment. Here, General Formula I, which represents the organic halide, is R¹-X. In the organic halide represented by General Formula I (R¹-X), R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium. It is not preferable to include a substituent that reacts with sodium because such a substituent causes a side reaction by reacting with the dispersion product obtained by dispersing sodium in a dispersion solvent. Therefore, if the starting compound is a compound that includes, as R¹, a substituent that reacts with sodium, the substituent needs to be protected by an appropriate protective group or the like.

The aliphatic hydrocarbon group may be linear or branched, and saturated or unsaturated. There is no particular limitation on the chain length. If a substituent is included, there is no particular limitation on the substituent so long as the substituent does not react with sodium. Also, there is no particular limitation on the number of substituents and the position to which a substituent is introduced. Examples of the aliphatic hydrocarbon group include, but are not limited to, alkyl groups, alkenyl groups, and alkynyl groups that preferably have 1 to 20 carbon atoms, and particularly preferably have 3 to 20 carbon atoms. Specifically, examples of alkyl groups include, but are not limited to, methyl group, ethyl group, propyl group, butyl group, methyl group, ethyl group, propyl group, isopropyl group, n-butyl group, isobutyl group, s-butyl group, t-butyl group, n-pentyl group, isopentyl group, neopentyl group, t-pentyl group, s-pentyl group, 2-methylbutyl group, 1-ethylpropyl group, 2-ethylpropyl group, n-hexyl group, isohexyl group, neohexyl group, t-hexyl group, 2,2-dimethylbutyl group, 2-methylpentyl group, 3-methylpentyl group, 1-ethylbutyl group, 2-ethylbutyl group, 1-propylpropyl group, n-heptyl group, isoheptyl group, s-heptyl group, t-heptyl group, 2,2-dimethylpentyl group, 3,3-dimethylpentyl group, 1-methylhexyl group, 2-methylhexyl group, 3-methylhexyl group, 4-methylhexyl group, 1-ethylpentyl group, 2-ethylpentyl group, 3-ethylpentyl group, 1-propylbutyl group, 2-propylbutyl group, n-octyl group, isooctyl group, t-octyl group, neooctyl group, 2,2-dimethylhexyl group, 3,3-dimethylhexyl group, 4,4-dimethylhexyl group, 1-methylheptyl group, 2-methylheptyl group, 3-methylheptyl group, 4-methylheptyl group, 5-methylheptyl group, 1-ethylhexyl group, 2-ethylhexyl group, 3-ethylhexyl group, 4-ethylhexyl group, 1-propylpentyl group, 2-propylpentyl group, 3-propylpentyl group, n-nonyl group, isononyl group, t-nonyl group, 1-methyloctyl group, 2-methyloctyl group, 3-methyloctyl group, 4-methyloctyl group, 5-methyloctyl group, 6-methyloctyl group, n-decyl group, isodecyl group, t-decyl group, 1-methylnonyl group, 2-methylnonyl group, 3-methylnonyl group, 4-methylnonyl group, 5-methylnonyl group, 6-methylnonyl group, 7-methylnonyl group. Examples of alkenyl groups include, but are not limited to, an ethenyl group, a propenyl group, a butenyl group, a pentenyl group, a hexenyl group, a heptenyl group, and an octenyl group. Examples of alkynyl groups include, but are not limited to, an ethynyl group, a propynyl group, a butynyl group, a pentynyl group, a heptynyl group, and an octynyl group.

The aliphatic hydrocarbon group optionally includes a substituent. The aliphatic hydrocarbon group may include one or more substituents, and if a plurality of substituents are included, the substituents may be the same as or differ from each other. Examples of substituents include, but are not limited to, an aliphatic hydrocarbon group, an alicyclic hydrocarbon group, an alicyclic heterocyclic group, an aromatic hydrocarbon group, an aromatic heterocyclic group, an alkoxy group, a cycloalkoxy group, an aryloxy group, an aralkyloxy group, an alicyclic heterocyclic oxy group, an aromatic heterocyclic oxy group, an alkylthio group, a cycloalkylthio group, an arylthio group, an aralkylthio group, an alicyclic heterocyclic thio group, an aromatic heterocyclic thio group, an alkylamino group, a cycloalkylamino group, an arylamino group, an aralkylamino group, an alicyclic heterocyclic amino group, an aromatic heterocyclic amino group, and an acyl group, which optionally include a substituent. Note that examples of the aliphatic hydrocarbon group are the same as those described above, and examples of the alicyclic hydrocarbon group, the alicyclic heterocyclic group, the aromatic hydrocarbon group, and the aromatic heterocyclic group are the same as those described below.

Examples of the alkoxy group include, but are not limited to, alkoxy groups that preferably have 1 to 10 carbon atoms, and specific examples include a methoxy group, an ethoxy group, a propoxy group, a butoxy group, a pentyloxy group, and a hexyloxy group. Examples of the cycloalkoxy group include cyclopropoxy groups that preferably have 3 to 10 carbon atoms, and include a cyclobutoxy group, a cyclopentyloxy group, and a cyclohexyloxy group. Examples of the aryloxy group include, but are not limited to, aryloxy groups that preferably have 6 to 20 carbon atoms, and specific examples include a phenyloxy group and a naphthyloxy group. Examples of the aralkyloxy group include aralkyloxy groups that preferably have 7 to 11 carbon atoms, and specific examples include a benzyloxy group and a phenethyloxy group. As for the alicyclic heterocyclic oxy group and the aromatic heterocyclic oxy group, examples of heterocyclic ring portions include alicyclic heterocyclic groups and aromatic heterocyclic groups described below.

Examples of the alkylthio group include, but are not limited to, alkylthio groups that preferably have 1 to 20 carbon atoms, and include a methylthio group, an ethylthio group, a propylthio group, a butylthio group, a pentylthio group, and a hexylthio group. Examples of the cycloalkylthio group include, but are not limited to, cycloalkylthio groups having 3 to 10 carbon atoms, and specific examples include a cyclopropylthio group, a cyclobutylthio group, a cyclopentylthio group, and a cyclohexylthio group. Examples of the arylthio group include, but are not limited to, arylthio groups that preferably have 6 to 20 carbon atoms, and specific examples include a phenylthio group and a naphthylthio group. Examples of the aralkylthio group include, but are not limited to, aralkylthio groups that preferably have 7 to 11 carbon atoms, and specific examples include a benzylthio group and a phenethylthio group. As for the alicyclic heterocyclic thio group and the aromatic heterocyclic thio group, examples of heterocyclic ring portions include alicyclic heterocyclic groups and aromatic heterocyclic groups described below.

As for the alicyclic hydrocarbon group, bonds between ring constituent atoms may be saturated or unsaturated, and there is no particular limitation on the number of ring members. Also, examples of the alicyclic hydrocarbon group include not only alicyclic hydrocarbon groups that have a single ring but also alicyclic hydrocarbon groups that have a group of rings, such as fused rings and spiro rings. Examples of the alicyclic hydrocarbon group include, but are not limited to, cycloalkyl groups that preferably have 3 to 10 carbon atoms and particularly preferably have 3 to 7 carbon atoms, and cycloalkenyl groups that preferably have 4 to 10 carbon atoms and particularly preferably have 4 to 7 carbon atoms. Specific examples of cycloalkyl groups include, but are not limited to, a cyclopropyl group, a cyclobutyl group, a cyclopentyl group, a cyclohexyl group, a cycloheptyl group, and a cyclooctyl group. Examples of cycloalkenyl groups include, but are not limited to, a cyclopropenyl group, a cyclobutenyl group, a cyclopentenyl group, a cyclohexenyl group, a cycloheptenyl group, and a cyclooctenyl group.

The alicyclic hydrocarbon group optionally includes a substituent. The alicyclic hydrocarbon group may include one or more substituents, and if a plurality of substituents are included, the substituents may be the same as or differ from each other. There is no particular limitation on positions of substituents. Examples of substituents are the same as those described as examples of substituents of the aliphatic hydrocarbon group.

The alicyclic heterocyclic group is a nonaromatic heterocyclic group that includes one or more hetero atoms as ring constituent atoms. Examples of the alicyclic heterocyclic group include not only alicyclic heterocyclic groups that have a single ring but also alicyclic heterocyclic groups that have a group of rings, such as fused rings and spiro rings. Bonds between ring constituent atoms may be saturated or unsaturated, and there is no particular limitation on the number of ring members. There is no particular limitation on hetero atoms so long as the hetero atoms, which are ring constituent atoms, do not react with sodium. There is no particular limitation on the number of hetero atoms and positions of hetero atoms. Preferable examples of hetero atoms include an oxygen atom, a nitrogen atom, and a sulfur atom. The number of carbon atoms included in the alicyclic heterocyclic group is preferably 2 to 7, and particularly preferably 2 to 5, and the number of hetero atoms included in the alicyclic heterocyclic group is preferably 1 to 5, and particularly preferably 1 to 3, for example. Note that if a plurality of hetero atoms are included, the hetero atoms may be the same as or different from each other. Examples of the alicyclic heterocyclic group include, but are not limited to: nitrogen-containing alicyclic heterocyclic groups such as a four-membered azetidinyl group, a five-membered pyrrolidinyl group, a six-membered piperidyl group, a six-membered piperazinyl group, which are monocyclic groups; oxygen-containing alicyclic heterocyclic groups such as a three-membered oxiranyl group, a four-membered oxetanyl group, a five-membered tetrahydrofuryl group, and a six-membered tetrahydropyranyl group, which are monocyclic groups; sulfur-containing alicyclic heterocyclic groups such as a five-membered monocyclic tetrahydrothiophenyl group; nitrogen-and-oxygen-containing alicyclic heterocyclic groups such as a six-membered monocyclic morpholinyl group; and nitrogen-and-sulfur-containing alicyclic heterocyclic groups such as a six-membered monocyclic thiomorpholinyl group.

The alicyclic heterocyclic group optionally includes a substituent. The alicyclic heterocyclic group may include one or more substituents, and if a plurality of substituents are included, the substituents may be the same as or differ from each other. There is no limitation on positions of substituents. Examples of substituents are the same as those described as examples of substituents of the aliphatic hydrocarbon group.

There is no particular limitation on the aromatic hydrocarbon group so long as the aromatic hydrocarbon group includes an aromatic ring. Examples of the aromatic hydrocarbon group include not only aromatic hydrocarbon groups that have a single ring but also aromatic hydrocarbon groups that have a group of rings, such as fused rings and spiro rings. There is no particular limitation on the number of ring members. The number of carbon atoms included in the aromatic hydrocarbon group is preferably 6 to 22, and particularly preferably 6 to 14, for example. Examples of the aromatic hydrocarbon group include, but are not limited to: a six-membered monocyclic phenyl group; a naphthyl group, a pentalenyl group, an indenyl group, and an azulenyl group, which are bicyclic groups; a biphenylenyl group, an indacenyl group, an acenaphthylenyl group, a fluorenyl group, a phenalenyl group, a phenanthryl group, and an anthryl group, which are tricyclic groups; a fluoranthenyl group, an aceanthrylenyl group, a triphenylenyl group, a pyrenyl group, and a naphthacenyl group, which are tetracyclic groups; a perylenyl group and a tetraphenylenyl group, which are pentacyclic groups; a hexacyclic pentacenyl group; and a rubicenyl group, a coronenyl group, and a heptacenyl group, which are heptacyclic groups. Particularly preferably, the aromatic hydrocarbon group is a phenyl group.

The aromatic hydrocarbon group optionally includes a substituent. The aromatic hydrocarbon group may include one or more substituents, and if a plurality of substituents are included, the substituents may be the same as or different from each other. There is no particular limitation on positions of substituents. Examples of substituents are the same as those described as examples of substituents of the aliphatic hydrocarbon group. An alkyl group such as a normal nonyl group is particularly preferable.

The aromatic heterocyclic group includes one or more hetero atoms as ring constituent atoms. Examples of the aromatic heterocyclic group include not only aromatic heterocyclic groups that have a single ring but also aromatic heterocyclic groups that have a group of rings, such as fused rings and spiro rings. There is no particular limitation on the number of ring members. There is no particular limitation on hetero atoms so long as the hetero atoms, which are ring constituent atoms, do not react with sodium. There is no particular limitation on the number of hetero atoms and positions of hetero atoms. Preferable examples of hetero atoms include an oxygen atom, a nitrogen atom, and a sulfur atom. The number of carbon atoms included in the aromatic heterocyclic group is preferably 1 to 5, and particularly preferably 3 to 5, and the number of hetero atoms included in the aromatic heterocyclic group is preferably 1 to 4, and particularly preferably 1 to 3, for example. Note that if a plurality of hetero atoms are included, the hetero atoms may be the same as or different from each other.

Examples of monocyclic aromatic heterocyclic groups include, but are not limited to: nitrogen-containing aromatic heterocyclic groups such as a pyrrolyl group, a pyrazolyl group, a pyridyl group, and an imidazolyl group, which include a five-membered ring, a pyrazinyl group, a pyrimidinyl group, and a pyridazinyl group, which include a six-membered ring; oxygen-containing aromatic heterocyclic groups such as a five-membered furyl group; sulfur-containing aromatic heterocyclic groups such as a five-membered thienyl group; nitrogen-and-oxygen-containing aromatic heterocyclic groups such as an oxazolyl group, an isoxazolyl group, and a furazanyl group, which include a five-membered ring; and nitrogen-and-sulfur-containing aromatic heterocyclic groups such as a thiazolyl group and an isothiazolyl group, which include a five-membered ring.

Examples of polycyclic aromatic heterocyclic groups include, but are not limited to: nitrogen-containing aromatic heterocyclic groups such as an indolizinyl group, an isoindolyl group, an indolyl group, an indazolyl group, a purinyl group, an isoquinolyl group, a quinolyl group, a phthalazinyl group, a naphthyridinyl group, a quinoxalinyl group, a quinazolinyl group, and a cinnolinyl group, which are bicyclic groups, a carbazolyl group, a carbolinyl group, a phenanthridinyl group, an acridinyl group, a perimidinyl group, a phenanthrolinyl group, and a phenazinyl group, which are tricyclic groups; oxygen-containing aromatic heterocyclic groups such as a benzofuranyl group, an isobenzofuranyl group, and a benzopyranyl group, which are bicyclic groups; sulfur-containing aromatic heterocyclic groups such as a bicyclic benzothienyl group and a tricyclic thianthrenyl group; nitrogen-and-oxygen containing aromatic heterocyclic groups such as a bicyclic benzoxazolyl group and a bicyclic benzisoxazolyl group; nitrogen-and-sulfur-containing aromatic heterocyclic groups such as a bicyclic benzothiazolyl group, a bicyclic benzisothiazolyl group, and a tricyclic phenothiazinyl group; and oxygen-and-sulfur-containing aromatic heterocyclic groups such as a tricyclic phenoxathiinyl group.

The aromatic heterocyclic group optionally includes a substituent. The aromatic heterocyclic group may include one or more substituents, and if a plurality of substituents are included, the substituents may be the same as or different from each other. There is no limitation on positions of substituents. Examples of substituents are the same as those described as examples of substituents of the aliphatic hydrocarbon group.

X is a halogen atom, which is specifically a chlorine atom, a bromine atom, an iodine atom, or a fluorine atom, and preferably a chlorine atom. Accordingly, an organic chloride represented by General Formula I^{a} (R¹-Cl) in which X = Cl can be preferably used as the organic halide represented by General Formula I (R¹-X). The use of an inexpensive organic chloride as the starting compound is more advantageous from economic standpoints. Furthermore, there is no problem such as localized production areas and low availability, which are problems regarding bromine, a raw material of an organic bromide, which is one type of organic halide, and there is no problem such as the need for waste treatment facilities that pose a large load in industrialization.

A commercially available organic halide or an organic halide produced using a method known in the art may be used as the starting compound.

A dispersion product (hereinafter may be abbreviated as "SD" which is an abbreviation of Sodium Dispersion) obtained by dispersing sodium in a dispersion solvent is obtained by dispersing minute particles of sodium in an antisolvent or dispersing sodium in a liquid form in an antisolvent. Examples of sodium include sodium metal and an alloy containing sodium metal. An average particle diameter of minute particles that can be used is preferably not larger than 10 µm, and particularly preferably not larger than 5 µm. The average particle diameter indicates the diameter of a sphere that has a projected area equivalent to a projected area obtained through image analysis of a micrograph.

A solvent known in the art can be used as the dispersion solvent so long as minute particles of sodium or sodium in a liquid form can be dispersed in an antisolvent, and the solvent does not inhibit a reaction between SD and the organic halide, which is the starting compound. Examples of the dispersion solvent include aromatic solvents such as xylene and toluene, normal paraffin-based solvents such as normal decane, heterocyclic compound solvents such as tetrahydrothiophene, and a solvent obtained by mixing any of these.

It is preferable to use an SD that has such activity that if 2.1 or more molar equivalents of the SD is reacted with chlorobenzene in a reaction solvent, the yield of phenylsodium is 99.0% or more with respect to added chlorobenzene. If such a highly active SD is used, a boronate ester compound can be more efficiently synthesized. To keep the activity of the SD high, the SD is preferably stored in a container, such as a glass vial, that has good gas barrier properties. However, the present disclosure does not exclude a case in which the SD is stored in a container that has poor gas barrier properties, and in such a case, the SD is used immediately after being manufactured, e.g., within a few weeks, and preferably within three weeks.

A solvent known in the art can be used as the reaction solvent in step 1 so long as the solvent does not inhibit a reaction between the organic halide, which is the starting compound, and the SD. Examples of solvents that can be used include ether-based solvents, paraffin-based solvents such as normal paraffin-based solvents and cycloparaffin-based solvents, aromatic solvents, amine-based solvents, and heterocyclic compound solvents. A cyclic ether solvent is preferable as an ether-based solvent, and tetrahydrofuran (hereinafter may be abbreviated as "THF") or the like can be preferably used. Cyclohexane, normal hexane, normal decane, and the like are particularly preferable as paraffin-based solvents. Xylene, toluene, benzene, and the like are preferable as aromatic solvents. Ethylenediamine or the like can be preferably used as an amine-based solvent. Tetrahydrothiophene or the like can be used as a heterocyclic compound solvent. It is possible to use only one of these solvents or a combination of two or more of these solvents as a mixed solvent. The reaction solvent may be of the same type as the above-described dispersion solvent or a different type from the dispersion solvent.

If a paraffin-based solvent is used, there is no particular limitation on a reaction temperature in step 1, and the reaction temperature can be appropriately set according to types and amounts of the organic halide, which is the starting compound, the SD, and the reaction solvent, a reaction pressure, and the like. Specifically, the reaction temperature is preferably set so as not to exceed a boiling point of the reaction solvent. In a pressurized state, the boiling point is higher than that under the atmospheric pressure, and accordingly the reaction temperature can be set to a high temperature. The reaction can also be carried out at room temperature, and the reaction temperature is preferably 0 to 100°C, particularly preferably 20 to 80°C, and further preferably from room temperature to 50 °C. A special temperature control means for heating, cooling, and the like need not be provided, but a temperature control means may also be provided as necessary. On the other hand, if a solvent other than a paraffin-based solvent is used, the reaction is preferably carried out at a low temperature, preferably around 0°C to prevent a reaction between the solvent and phenylsodium, which is a preferable example of R¹-Na produced in the reaction in step 1, for example. Here, if an equimolar amount of THF is added to the organic halide, generation of biphenyl can be effectively suppressed, and a favorable reaction rate can be maintained. Accordingly, a target compound can be efficiently synthesized as a result of the type and the amount of the reaction solvent being appropriately controlled.

There is no particular limitation on a reaction time of step 1, and the reaction time can be appropriately set according to types and amounts of the organic halide, which is the starting compound, the SD, and the reaction solvent, the reaction pressure, the reaction temperature, and the like. Usually, the reaction is carried out for 15 minutes to 24 hours, and preferably for 20 minutes to 6 hours.

SD and reagents such as the reaction solvent can be stably handled under atmospheric pressure, and therefore normal pressure conditions under atmospheric pressure are suitable for step 1. However, phenylsodium, which is a preferable example of R¹-Na to be produced, is highly active and protonated with moisture if even a small amount of air is mixed in, and therefore the reaction may also be carried out in an inert gas atmosphere filled with an argon gas, a nitrogen gas, or the like, as necessary.

General Formula II that represents the organic sodium compound obtained through step 1 is R¹-Na, in which the halogen atom of the organic halide represented by General Formula I (R¹-X), which is the starting compound, is substituted by sodium. Accordingly, in General Formula II (R¹-Na), R¹ is the same as R¹ in the above-described General Formula I, and Na is a sodium atom. The obtained organic sodium compound may also be purified using a purification means known in the art, such as column chromatography, distillation, or recrystallization. Also, the organic halide that is the starting compound and is left unreacted may be collected and again used for the reaction in step 1. This may also be carried out in an inert gas atmosphere filled with an argon gas, a nitrogen gas, or the like, as is the case with the generation of the organic sodium compound.

### Step 2

In step 2, the organic sodium compound represented by the above-described General Formula II, which is obtained through step 1, is reacted with a borate ester compound represented by General Formula III shown below to obtain a boronate ester compound represented by General Formula IV shown below as a final target compound.

The borate ester compound represented by General Formula III is shown below.

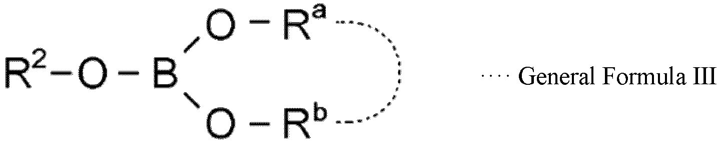

In General Formula III, R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium. It is not preferable to include a substituent that reacts with sodium because such a substituent causes a side reaction by reacting with the dispersion product obtained by dispersing sodium in a dispersion solvent. Therefore, if the borate ester compound includes, as R², a substituent that reacts with sodium, the substituent needs to be protected by an appropriate protective group or the like. Definitions of the aliphatic hydrocarbon group, the alicyclic hydrocarbon group, the alicyclic heterocyclic group, the aromatic hydrocarbon group, and the aromatic heterocyclic group that optionally include substituents that do not react with sodium are as described with respect to R¹ in the section Step 1, but R² in General Formula III is independent of R¹ in General Formula I. Preferable examples of R² include a methyl group and an isopropyl group.

In General Formula III, R^{a} and R^{b} are each, independently of each other, an aliphatic hydrocarbon group or an aromatic hydrocarbon group, which optionally includes a substituent that does not react with sodium, and R^{a} and R^{b} may be the same as or different from each other. R^{a} and R^{b} may be bonded to each other via a bond (indicated by a dotted line) therebetween, forming a ring together with a boron atom and two oxygen atoms bonded to the boron atom, or may be independent of each other without being bonded to each other. If R^{a} and R^{b} are bonded to each other and form a ring, the position of the bond between R^{a} and R^{b} is not limited. The ring may also have a structure of a spiro ring or a fused ring. Definitions of the aliphatic hydrocarbon group and the aromatic hydrocarbon group (aryl group) that optionally include substituents that do not react with sodium are as described with respect to R¹ in the section Step 1. However, if R^{a} and R^{b} are bonded to each other, each of R^{a} and R^{b} corresponds to a group that is obtained by removing one hydrogen atom from a carbon atom at the position of the bond between R^{a} and R^{b} in the aliphatic hydrocarbon group or the aromatic hydrocarbon group defined with respect to R¹. The aliphatic hydrocarbon group may be linear or branched, and saturated or unsaturated. There is no particular limitation on the chain length. If a substituent is included, there is no particular limitation on the substituent so long as the substituent does not react with sodium. Also, there is no particular limitation on the number of substituents and the position to which a substituent is introduced. Examples of aliphatic hydrocarbon groups include, but are not limited to, alkylene groups, alkenylene groups, and alkynylene groups that preferably have 1 to 20 carbon atoms, and particularly preferably have 1 to 5 carbon atoms. Examples of aromatic hydrocarbon groups include, but are not limited to, catechols that preferably have 6 to 14 carbon atoms, and particularly preferably have 6 carbon atoms. Here, the number of ring members that constitute a ring structure formed by the boron atom, the two oxygen atoms bonded to the boron atom, and atoms bonded to the oxygen atoms is preferably 4 to 8. Atoms forming the ring structure may also include substituents, and substituents introduced into the ring structure may also be bonded to each other forming another ring structure.

Examples of a group that is formed as a result of R^{a} and R^{b} being bonded to each other include a 1,1,2,2-tetramethylethylene group that forms a pinacol ring, a 1,1,2-trimethylpropylene group, a 2,2-dimethylpropylene group, a propylene group, an o-phenylene group, a 1-(4-methoxyphenyl)-2,2-dimethylethylene group, and a (1R,2R,3S,5R)-2,6,6-trimethylbicyclo[3.1.1]heptane-2,3-diyl group, and groups that form a pinacol ring are preferable.

Examples of the borate ester compound represented by General Formula III include a pinacol ester, an MIDA ester, a catechol ester, a neopentylglycol ester, a pinanediol ester, a biscyclohexyldiol ester, an MPMP ester, or the like of boric acid.

Preferably, the borate ester compound represented by General Formula III is a compound that includes a group forming a pinacol ring and is represented by General Formula V shown below. In General Formula V, R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium and details of which are as described with respect to R² in the above-described General Formula III.

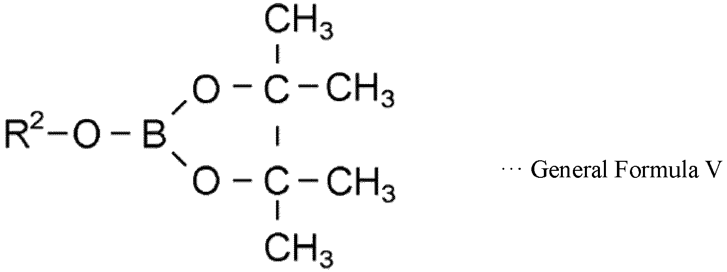

Specific examples of the borate ester compound represented by General Formula III include, but are not limited to, 2-methoxy-4,4,5,5-tetramethyl-1,3,2-dioxaborolane (pinacol methoxyboronate), 2-ethoxy-4,4,5,5-tetramethyl-1,3,2-dioxaborolane (pinacol ethoxyboronate), 2-isopropoxy-4,4,5,5-tetramethyl-1,3,2-dioxaborolane (pinacol isopropoxyboronate), 2-isopropoxy-4,4,6-trimethyl-1,3,2-dioxaborinane, and trimethyl borate. Preferably, the borate ester compound represented by General Formula III is pinacol methoxyboronate, pinacol isopropoxyboronate, or trimethyl borate.

A commercially available borate ester compound or a borate ester compound produced using a method known in the art may be used as the borate ester compound represented by General Formula III. For example, pinacol methoxyboronate can be obtained by reacting pinacol with trimethyl borate.

Step 2 may be carried out by adding a borate ester compound to a reaction product obtained through step 1 or adding a borate ester compound in the presence of a reaction solvent after purifying the reaction product obtained through step 1 using a purification means known in the art. Reaction solvents that can be used are the same as those that can be used in step 1.

If a paraffin-based solvent is used, there is no particular limitation on a reaction temperature in step 2, and the reaction temperature can be appropriately set according to types and amounts of the organic sodium compound, SD, and the reaction solvent, a reaction pressure, and the like. Specifically, the reaction temperature is preferably set so as not to exceed the boiling point of the reaction solvent. In a pressurized state, the boiling point is higher than that under atmospheric pressure, and accordingly, the reaction temperature can be set to a high temperature. The reaction can also be carried out at room temperature, and the reaction temperature is preferably 0 to 100°C, particularly preferably 20 to 80°C, and further preferably from room temperature to 50°C. A special temperature control means for heating, cooling, and the like need not be provided, but a temperature control means may also be provided as necessary. On the other hand, if a solvent other than a paraffin-based solvent is used, the reaction is preferably carried out at a low temperature, preferably around 0°C, to prevent a reaction between the solvent and phenylsodium, which is a preferable example of R¹-Na produced in the reaction in step 1, for example.

There is no particular limitation on a reaction time of step 2, and the reaction time can be appropriately set according to types and amounts of the organic sodium compound, SD, the borate ester compound, and the reaction solvent, the reaction pressure, the reaction temperature, and the like. Usually, the reaction is carried out for 5 minutes to 2 hours, and preferably for 10 minutes to 1 hour.

The organic sodium compound reacts with oxygen and moisture, and therefore step 2 needs to be performed in an inert gas atmosphere filled with an argon gas, a nitrogen gas, or the like.

The boronate ester compound represented by General Formula IV shown below, which is a desired final target compound, can be obtained through the reaction of step 2.

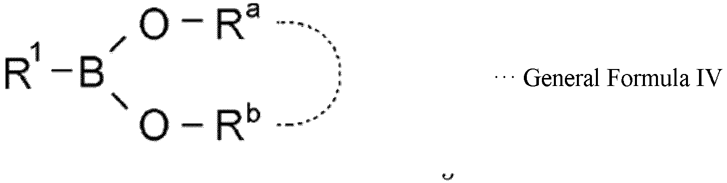

The boronate ester compound represented by General Formula IV shown above is obtained as a result of sodium of the organic sodium compound represented by General Formula II (R¹-Na) being substituted by a borate ester group (-B(OR)₂). Accordingly, in General Formula IV, R¹ corresponds to R¹ in the above-described General Formulas I and II, and R^{a} and R^{b} correspond to R^{a} and R^{b} in the above-described General Formula III. The boronate ester compound represented by General Formula IV is particularly preferably 2-phenyl-4,4,5,5-tetramethyl-1,3,2-dioxaborolane (pinacol phenylboronate).

Amounts of the SD and the borate ester compound used in the method for synthesizing a boronate ester compound according to the present embodiment can be appropriately set according to types and amounts of the starting compound and the reaction solvent. The reaction between the organic halide and the SD is preferably carried out at a molar ratio (organic halide:SD) of 1:2 or more. More preferably, the reaction is carried out at a molar ratio of 1:2 or more and 3 or less. If the reaction is carried out at this ratio, the boronate ester compound can be synthesized with high efficiency and high purity. Also, the reaction between the borate ester compound and the organic sodium compound produced through the reaction between the organic halide and the SD is preferably carried out at a ratio (organic sodium compound:borate ester compound) of 1:1 or more and 1.5 or less. Here, the substance amount of the SD means the substance amount in terms of alkali metal contained in the SD.

The boronate ester compound, which is the final product of the method for synthesizing a boronate ester compound according to the present embodiment, may also be purified using a purification means known in the art, such as recrystallization. Also, the organic halide, the organic sodium compound, and the like that are left unreacted may be collected and again used for the synthesis of the boronate ester compound.

With the method for synthesizing a boronate ester compound according to the present embodiment, a boronate ester compound can be stably and efficiently synthesized using the SD. As a result of the SD, which can be easily handled, being used, the boronate ester compound can be easily synthesized at a low cost in a short time with a small number of steps under moderate conditions without the need for a complex chemical method, and therefore the synthesis method is extremely advantageous from economic and industrial standpoints. Sodium is extremely widely distributed on the earth, and therefore this technology has excellent sustainability. On the other hand, if sodium metal in a solid form is used, the efficiency is low if the reaction temperature is room temperature, and therefore the reaction needs to be carried out at a high temperature, e.g., at least a melting point (98°C) of sodium metal. If the reaction is carried out at such a high temperature, a Wurtz reaction in which organic halides are coupled to each other occurs, the organic sodium compound cannot be efficiently synthesized, and the yield of the boronate ester compound is reduced. Furthermore, it is assumed that if sodium metal in a solid form is added, a localized strong reaction accompanied by abnormal heat generation occurs around the solid sodium metal in a reaction system, causing a side reaction such as the Wurtz reaction. In contrast, if the SD is used, the reaction can progress under moderate conditions and the SD, which is a fluid, can be uniformly dispersed in the reaction system, and therefore the organic sodium compound can be efficiently obtained without a side reaction such as the Wurtz reaction being caused, and consequently the boronate ester compound can be synthesized with a high yield and high purity.

The boronate ester compound synthesized using the method for synthesizing a boronate ester compound according to the present embodiment can be favorably used for Suzuki-Miyaura coupling and the like. In Suzuki-Miyaura coupling, a palladium catalyst is reacted with an organic boron compound in the presence of a base, and the base needs to be separately added to cause the reaction. That is, as a result of the base being added, a bond between carbon and boron of the boronate ester compound is activated, and the reaction with the palladium catalyst progresses only after such an activated state is realized. With regard to the base, sodium alkoxide, which is a byproduct produced in the reaction between the organic sodium compound represented by General Formula II and the borate represented by General Formula III in the method for synthesizing a boronate ester compound according to the present embodiment can serve as the base required in Suzuki-Miyaura coupling, or if water is added, sodium hydroxide produced in a reaction between water and sodium can serve as the base, and there is no need to separately provide a process for adding the base, and this is advantageous from economic and industrial standpoints. As described above, the method for synthesizing a boronate ester compound according to the present embodiment can be used in various technical fields, such as the synthesis of functional materials such as medicines, agricultural chemicals, and electronic materials.

The palladium catalyst used in Suzuki-Miyaura coupling is preferably Pd(PPh₃)₄ or PEPPSI-IPr if a functional group of a compound to be coupled with the boronate ester compound is bromine, and is preferably PEPPSI-IPr if the functional group is chlorine. Transition metal catalysts containing Pd, Ni, Fe, Co, and the like can also be used, as well as the above-described catalysts.

### Novel Sodium Salt of Boronate Ester Compound

A sodium salt of a boronate ester compound according to the present embodiment is a novel compound represented by General Formula VI shown below.

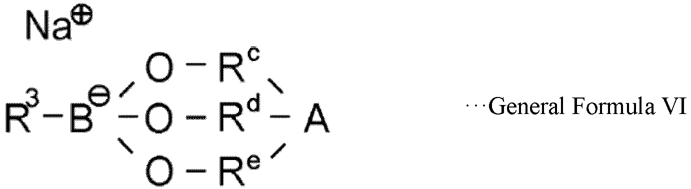

In General Formula VI, R³ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium. Definitions of the aliphatic hydrocarbon group, the alicyclic hydrocarbon group, the alicyclic heterocyclic group, the aromatic hydrocarbon group, and the aromatic heterocyclic group that optionally include substituents that do not react with sodium are as described with respect to R¹ in the above-described section Step 1 of Boronate Ester Compound. Preferably, R³ is an aromatic hydrocarbon group (aryl group) such as a phenyl group or a 4-methylphenyl group.

In General Formula VI, Ais an atom selected from a nitrogen atom, a carbon atom, a silicon atom, and a phosphorus atom, and preferably a nitrogen atom.

In General Formula VI, R^{c}, R^{d}, and R^{e} are each, independently of each other, an aliphatic hydrocarbon group that optionally includes a substituent that does not react with sodium, and all of R^{c}, R^{d}, and R^{e} may be the same as each other, or some or all of R^{c}, R^{d}, and R^{e} may be different from each other. The aliphatic hydrocarbon group may be linear or branched, and saturated or unsaturated. There is no particular limitation on the chain length. If a substituent is included, there is no particular limitation on the substituent so long as the substituent does not react with sodium. Also, there is no particular limitation on the number of substituents and the position to which a substituent is introduced. Definitions of the aliphatic hydrocarbon group that optionally includes a substituent that does not react with sodium are as described with respect to R¹ in the above-described section Step 1 of Method for Synthesizing Boronate Ester Compound, but each of R^{c}, R^{d}, and R^{e} is bonded to a boron atom and A, and accordingly each of R^{c}, R^{d}, and R^{e} corresponds to a group that is obtained by removing one hydrogen atom from a carbon atom in the aliphatic hydrocarbon group defined with respect to R¹. Examples of the aliphatic hydrocarbon group include, but are not limited to, alkylene groups, alkenylene groups, and alkynylene groups that preferably have 1 to 5 carbon atoms, and particularly preferably have 1 to 3 carbon atoms. Preferably, each of R^{c}, R^{d}, and R^{e} is an ethylene group.

A preferred example of the sodium salt of a boronate ester compound is a compound represented by Chemical Formula VIII shown below.

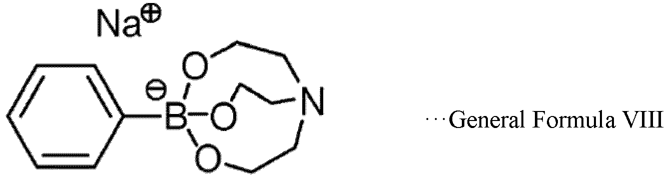

According to the sodium salt of a boronate according to the present embodiment, a sodium salt of a boronate ester represented by the above General Formula VIII, which is a novel compound, can be provided. The compound can be used in various technical fields, such as the synthesis of functional materials such as medicines, agricultural chemicals, and electronic materials.

### Method for Synthesizing Sodium Salt of Boronate Ester Compound

In a method for synthesizing a sodium salt of a boronate ester compound according to the present embodiment, in a reaction solvent, an organic halide represented by General Formula I shown below is reacted with a dispersion product obtained by dispersing sodium in a dispersion solvent, to obtain an organic sodium compound represented by General Formula II shown below (step 1). The obtained organic sodium compound is reacted with a borate ester compound represented by General Formula VII shown below to obtain a sodium salt of a boronate ester compound represented by General Formula VI shown below (step 2b). The sodium salt of a boronate ester compound can be synthesized depending on the borate ester compound added in step 2b.

### Step 1

In step 1, in a reaction solvent, an organic halide represented by General Formula I shown below is reacted with a dispersion product obtained by dispersing sodium in a dispersion solvent, to obtain an organic sodium compound represented by General Formula II shown below. This step can be carried out in the same manner as that described above in Method for Synthesizing Boronate Ester Compound.

The organic halide used in the method for synthesizing a sodium salt of a boronate ester compound according to the present embodiment is an organic compound that includes a covalently bonded halogen atom and is a starting compound of a method for synthesizing a sodium salt of an organic boron compound according to the present embodiment. Here, General Formula I that represents the organic halide is R¹-X. In the organic halide represented by General Formula I (R¹-X), R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium. Details of the organic halide are the same as those of the organic halide described above in Method for Synthesizing Boronate Ester Compound.

Details of the dispersion product (hereinafter may be abbreviated as "SD" which is an abbreviation of Sodium Dispersion) obtained by dispersing sodium in a dispersion solvent and used in the method for synthesizing a sodium salt of a boronate ester compound according to the present embodiment are the same as details of SD described above in Method for Synthesizing Boronate Ester Compound.

Step 1 in the method for synthesizing a sodium salt of a boronate ester compound according to the present embodiment can be carried out using the same reaction solvent under the same reaction conditions as those in step 1 described above in Method for Synthesizing Boronate Ester Compound.

General Formula II that represents the organic sodium compound obtained through step 1 is R¹-Na, in which the halogen atom of the organic halide represented by General Formula I (R¹-X), which is the starting compound, is substituted by sodium. Accordingly, in General Formula II (R¹-Na), R¹ is the same as R¹ in the above-described General Formula I, and Na is a sodium atom. The obtained organic sodium compound may also be purified using a purification means known in the art, such as column chromatography, distillation, or recrystallization. Also, the organic halide that is the starting compound and is left unreacted may be collected and again used for the reaction in step 1. This may also be carried out in an inert gas atmosphere filled with an argon gas, a nitrogen gas, or the like, as is the case with the generation of the organic sodium compound.

### Step 2b

In step 2b, the organic sodium compound represented by the above-described General Formula II, which is obtained through step 1, is reacted with a borate ester compound represented by General Formula VII shown below to obtain a sodium salt of a boronate ester compound represented by General Formula VI shown below as a final target compound.

The borate ester compound represented by General Formula VII is shown below.

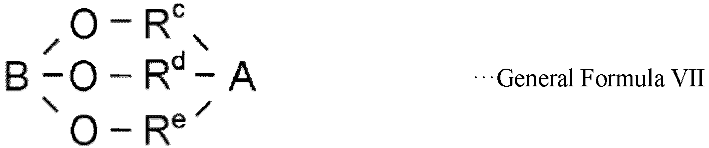

In General Formula VII, A is an atom selected from a nitrogen atom, a carbon atom, a silicon atom, and a phosphorus atom, and preferably a nitrogen atom.

In General Formula VII, R^{c}, R^{d}, and R^{e} are each, independently of each other, an aliphatic hydrocarbon group that optionally includes a substituent that does not react with sodium, and all of R^{c}, R^{d}, and R^{e} may be the same as each other, or some or all of R^{c}, R^{d}, and R^{e} may be different from each other. The aliphatic hydrocarbon group may be linear or branched, and saturated or unsaturated. There is no particular limitation on the chain length. If a substituent is included, there is no particular limitation on the substituent so long as the substituent does not react with sodium. Also, there is no particular limitation on the number of substituents and the position to which a substituent is introduced. Definitions of the aliphatic hydrocarbon group that optionally includes a substituent that does not react with sodium are as described with respect to R¹ in the above-described section Step 1 of Method for Synthesizing Boronate Ester Compound, but each of R^{c}, R^{d}, and R^{e} is bonded to a boron atom and A, and accordingly each of R^{c}, R^{d}, and R^{e} corresponds to a group that is obtained by removing one hydrogen atom from a carbon atom in the aliphatic hydrocarbon group defined with respect to R¹. Examples of the aliphatic hydrocarbon group include, but are not limited to, alkylene groups, alkenylene groups, and alkynylene groups that preferably have 1 to 5 carbon atoms, and particularly preferably have 1 to 3 carbon atoms. Preferably, each of R^{c}, R^{d}, and R^{e} is an ethylene group.

Examples of the borate ester compound represented by General Formula VII include, but are not limited to, triethanolamine borate, triisopropanolamine borate, and a cyclic triol borate salt. Preferably, the borate ester compound represented by General Formula VII is triethanolamine borate.

A commercially available borate ester compound or a borate ester compound produced using a method known in the art may be used as the borate ester compound represented by General Formula VII. For example, triethanolamine borate can be obtained by reacting triethanolamine with boric acid.

In the borate ester compound represented by General Formula VII, all of three groups that are bonded to a boron atom form a ring structure via A. The ring structure is stable, and therefore the groups do not separate from the boron atom even in the presence of sodium, and a boronate ester compound to be produced takes the form of a sodium salt. Therefore, if all hydroxyl groups (-O-) that are bonded to a boron atom in a borate ester compound form a ring structure as shown in General Formula VII, a boronate ester compound to be produced takes the form of a sodium salt. In contrast, it can be understood that if at least one of hydroxyl groups bonded to a boron atom is not involved in the formation of a ring structure as shown in General Formula III, i.e., if the at least one hydroxyl group is independent of the ring structure, a boronate ester compound to be produced does not take the form of a sodium salt.

Step 2b in the method for synthesizing a sodium salt of a boronate ester compound according to the present embodiment can be carried out using the same reaction solvent under the same reaction conditions as those in step 2 described above in Method for Synthesizing Boronate Ester Compound.

Through the reaction of step 2b, a sodium salt of a boronate ester compound represented by General Formula VI shown below can be obtained as a desired final target compound.

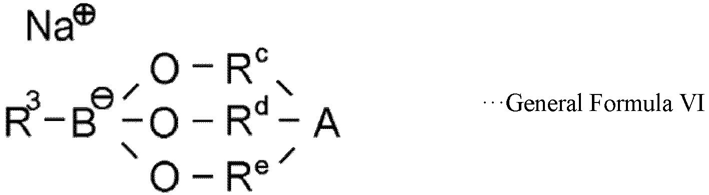

The sodium salt of a boronate ester compound represented by General Formula VI is formed through substitution of sodium of the organic sodium compound represented by General Formula II (R¹-Na) by (-B(OR)₃A), such as a triesteramine borate group, and formation of a salt with sodium derived from the organic sodium compound. Accordingly, in General Formula VI, R³ corresponds to R¹ in the above-described General Formulas I and II, and R^{c}, R^{d}, and R^{e} correspond to R^{c}, R^{d}, and R^{e} in the above-described General Formula VII. A particularly preferable example of the sodium salt of a boronate ester compound represented by General Formula VI is a sodium salt of triethanolamine phenylborate.

Amounts of the SD and the borate ester compound used in the method for synthesizing a sodium salt of a boronate ester compound according to the present embodiment can be appropriately set according to types and amounts of the starting compound and the reaction solvent. The reaction between the organic halide and the SD is preferably carried out at a molar ratio (organic halide: SD) of 1:2 or more. More preferably, the reaction is carried at a molar ratio of 1:2 or more and 3 or less. If the reaction is carried out at this ratio, the sodium salt of a boronate ester compound can be efficiently synthesized with high purity. Also, the borate ester compound is preferably reacted with the organic sodium compound produced through the reaction between the organic halide and the SD at a ratio (organic sodium compound:borate ester compound) of 1:0.5 or more and 1.5 or less. Here, the substance amount of the SD means the substance amount in terms of alkali metal contained in the SD.

The sodium salt of a boronate ester compound, which is the final product of the method for synthesizing a sodium salt of a boronate ester compound according to the present embodiment, may also be purified using a purification means known in the art, such as recrystallization. Also, the organic halide, the organic sodium compound, and the like that are left unreacted may be collected and again used for the synthesis of the sodium salt of a boronate ester compound.

With the method for synthesizing a sodium salt of a boronate ester compound according to the present embodiment, a sodium salt of a boronate ester compound that is a novel compound can be stably synthesized using the SD. As a result of the SD, which can be easily handled, being used, the sodium salt of a boronate ester compound can be easily synthesized at a low cost in a short time with a small number of steps under moderate conditions without the need for a complex chemical method, and therefore the synthesis method is extremely advantageous from economic and industrial standpoints. Sodium is extremely widely distributed on the earth, and therefore this technology has excellent sustainability. On the other hand, if sodium metal in a solid form is used, the efficiency is low if the reaction temperature is room temperature, and therefore the reaction needs to be carried out at a high temperature, e.g., at least a melting point (98°C) of sodium metal, for example. If the reaction is carried out at such a high temperature, the Wurtz reaction in which organic halides are coupled to each other occurs, the organic sodium compound cannot be efficiently synthesized, and the yield of the sodium salt of a boronate ester compound is reduced. Furthermore, it is assumed that if sodium metal in a solid form is added, a localized strong reaction accompanied by abnormal heat generation occurs around the solid sodium metal in a reaction system, causing a side reaction such as the Wurtz reaction. In contrast, if the SD is used, the reaction can progress under moderate conditions and the SD, which is a fluid, can be uniformly dispersed in the reaction system, and therefore the organic sodium compound can be efficiently obtained without a side reaction such as the Wurtz reaction being caused, and consequently the novel sodium salt of a boronate ester compound can be synthesized.

The sodium salt of a boronate ester compound synthesized using the method for synthesizing a salt of a boronate ester compound according to the present embodiment can be favorably used for Suzuki-Miyaura coupling and the like. In Suzuki-Miyaura coupling, a palladium catalyst is reacted with an organic boron compound in the presence of a base, and the base needs to be separately added to cause the reaction. That is, as a result of the base being added, a bond between carbon and boron of the boronate ester compound is activated, and the reaction with the palladium catalyst progresses only after such an activated state is realized. With regard to the base, the sodium salt of a boronate ester compound produced through the method for synthesizing a salt of a boronate ester compound according to the present embodiment can serve as the base required in Suzuki-Miyaura coupling, or if water is added, sodium hydroxide produced in a reaction between water and sodium can serve as the base, and there is no need to separately provide a process for adding the base, and this is advantageous from economic and industrial standpoints. As described above, the method for synthesizing a sodium salt of a boronate ester compound according to the present embodiment can be used in various technical fields, such as the synthesis of functional materials such as medicines, agricultural chemicals, and electronic materials.

The palladium catalyst used in Suzuki-Miyaura coupling is preferably Pd(PPh₃)₄ or PEPPSI-IPr if a functional group of a compound to be coupled with the boronate ester compound is bromine, and is preferably PEPPSI-IPr if the functional group is chlorine. Transition metal catalysts containing Pd, Ni, Fe, Co, and the like can also be used, as well as the above-described catalysts.

### Examples

Hereinafter, the present invention will be specifically described by use of examples, but the present invention is not limited to these examples. Note that in the following examples, a dispersion product obtained by dispersing minute particles of sodium metal in normal paraffin oil was used as the SD, and the substance amount of the SD was a value in terms of sodium metal contained in SD.

### Example 1

### Synthesis of boronate ester compound through reaction between organic sodium compound synthesized using SD and borate ester compound, and Suzuki-Miyaura coupling

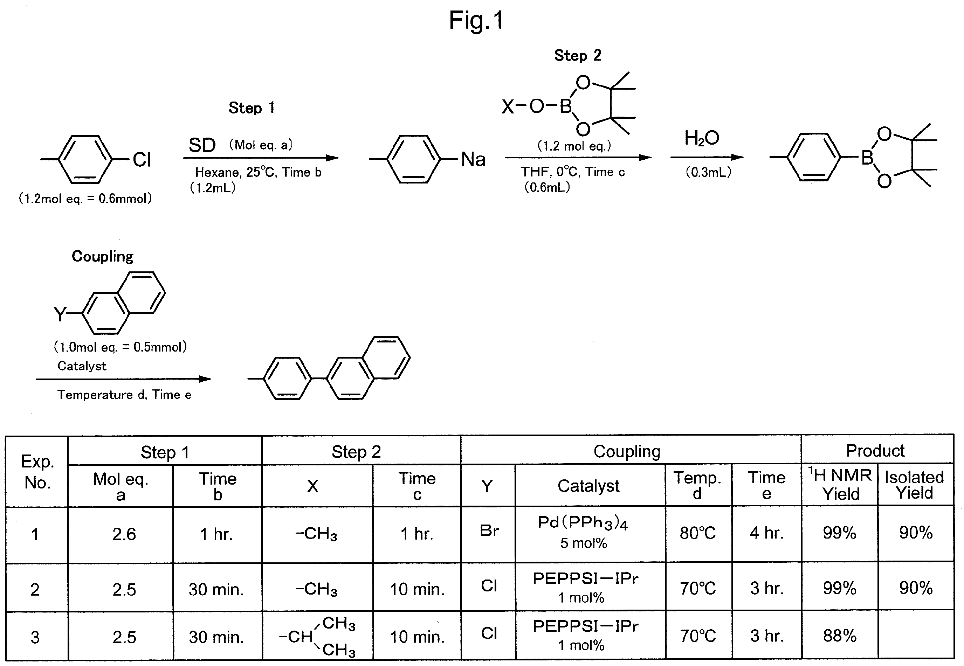

In this example, boronate ester compounds were synthesized through reactions between organic sodium compounds synthesized using the SD and borate ester compounds under synthesis conditions summarized in FIG. 1, and whether or not the obtained boronate ester compounds could be used for Suzuki-Miyaura coupling in which palladium catalysts were used was investigated.

### Experiment No. 1

1.2 molar equivalents of 4-chlorotoluene (0.6 mmol) was reacted with 2.6 molar equivalents of the SD at 25°C for 1 hour in 1.2 ml of hexane to obtain 4-methylphenylsodium. Subsequently, the reaction system was cooled to 0°C, and then 1.2 molar equivalents of pinacol methoxyboronate and 0.6 ml of THF were added to the produced 4-methylphenylsodium in this order and a reaction was carried out for 1 hour to obtain pinacol 4-methylphenylboronate. Subsequently, 0.3 ml of water was added, and then 1.0 molar equivalent of 2-bromonaphthalene (0.5 mmol) was added and a reaction was carried out at 80°C for 4 hours in the presence of 5 mol% of palladium catalyst Pd(PPh₃)₄ to obtain 2-(4-methylphenyl)naphthalene as a coupling product. The synthesized 2-(4-methylphenyl)naphthalene was evaluated through 1H NMR measurement. The yield was calculated as a percentage of an amount of actually obtained 2-(4-methylphenyl)naphthalene relative to an amount of 2-(4-methylphenyl)naphthalene that can be theoretically produced from 2-bromonaphthalene added to the reaction system. The yield was 99%. Note that the isolation yield was 90%. It can be understood from the above that pinacol 4-methylphenylboronate can be synthesized with a high yield from 4-chlorotoluene through the synthesis of 4-methylphenylsodium, and Suzuki-Miyaura coupling in which pinacol 4-methylphenylboronate is used efficiently progresses, and consequently 2-(4-methylphenyl)naphthalene can be obtained with a high yield as a coupling product.

### Experiment No. 2

1.2 molar equivalents of 4-chlorotoluene (0.6 mmol) was reacted with 2.5 molar equivalents of the SD at 25°C for 30 minutes in 1.2 ml of hexane to obtain 4-methylphenylsodium. Subsequently, the reaction system was cooled to 0°C, and then 1.2 molar equivalents of pinacol methoxyboronate and 0.6 ml of THF were added to the produced 4-methylphenylsodium in this order and a reaction was carried out for 10 minutes to obtain pinacol 4-methylphenylboronate. Subsequently, 0.3 ml of water was added, and then 1.0 molar equivalent of 2-chloronaphthalene (0.5 mmol) was added and a reaction was carried out at 70°C for 3 hours in the presence of 1 mol% of palladium catalyst PEPPSI-IPr to obtain 2-(4-methylphenyl)naphthalene as a coupling product. The synthesized 2-(4-methylphenyl)naphthalene was evaluated through 1H NMR measurement. The yield was calculated as a percentage of an amount of actually obtained 2-(4-methylphenyl)naphthalene relative to an amount of 2-(4-methylphenyl)naphthalene that can be theoretically produced from 2-chloronaphthalene added to the reaction system. The yield was 99%. Note that the isolation yield was 90%. It can be understood from the above that similarly to Experiment No. 1, pinacol 4-methylphenylboronate can be synthesized with a high yield from 4-chlorotoluene through the synthesis of 4-methylphenylsodium, and Suzuki-Miyaura coupling in which pinacol 4-methylphenylboronate is used efficiently progresses, and consequently 2-(4-methylphenyl)naphthalene can be obtained with a high yield as a coupling product.

### Experiment No. 3

1.2 molar equivalents of 4-chlorotoluene (0.6 mmol) was reacted with 2.5 molar equivalents of the SD at 25°C for 30 minutes in 1.2 ml of hexane to obtain 4-methylphenylsodium. Subsequently, the reaction system was cooled to 0°C, and then 1.2 molar equivalents of pinacol isopropoxyboronate and 0.6 ml of THF were added to the produced 4-methylphenylsodium in this order and a reaction was carried out for 10 minutes to obtain pinacol 4-methylphenylboronate. Subsequently, 0.3 ml of water was added, and then 1.0 molar equivalent of 2-chloronaphthalene (0.5 mmol) was added and a reaction was carried out at 70°C for 3 hours in the presence of 1 mol% of palladium catalyst PEPPSI-IPr to obtain 2-(4-methylphenyl)naphthalene as a coupling product. The synthesized 2-(4-methylphenyl)naphthalene was evaluated through 1H NMR measurement. The yield calculated similarly to Experiment No. 2 was 88%. It can be understood from the above that similarly to Experiment Nos. 1 and 2, pinacol 4-methylphenylboronate can be synthesized with a high yield from 4-chlorotoluene through the synthesis of 4-methylphenylsodium, and Suzuki-Miyaura coupling in which pinacol 4-methylphenylboronate is used efficiently progresses, and consequently 2-(4-methylphenyl)naphthalene can be obtained with a high yield as a coupling product.

### Example 2

### Synthesis of boronate ester compound through reaction between organic sodium compound synthesized using SD and borate ester compound, and Suzuki-Miyaura coupling

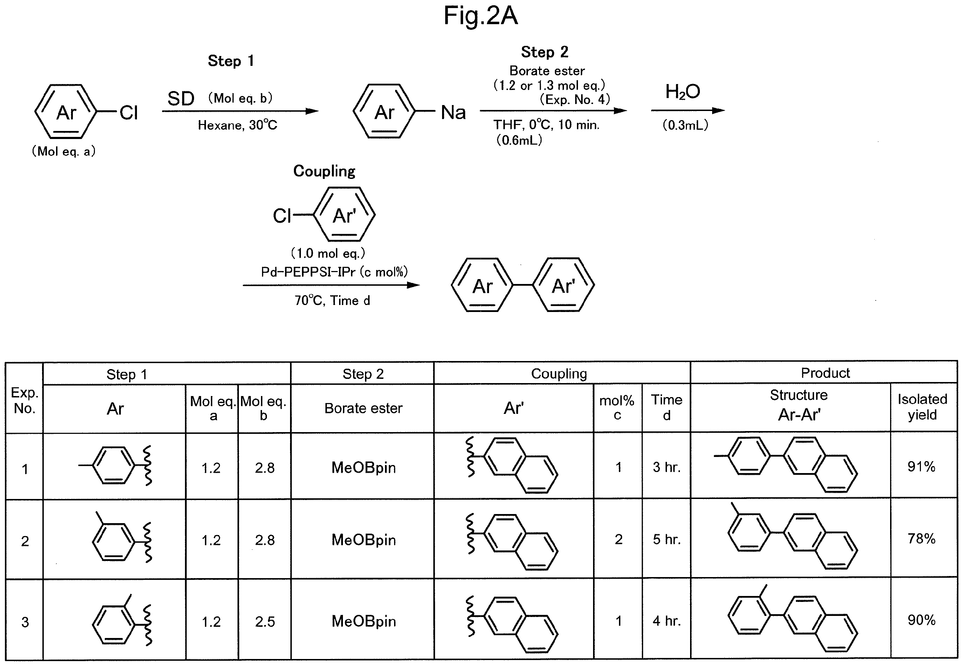

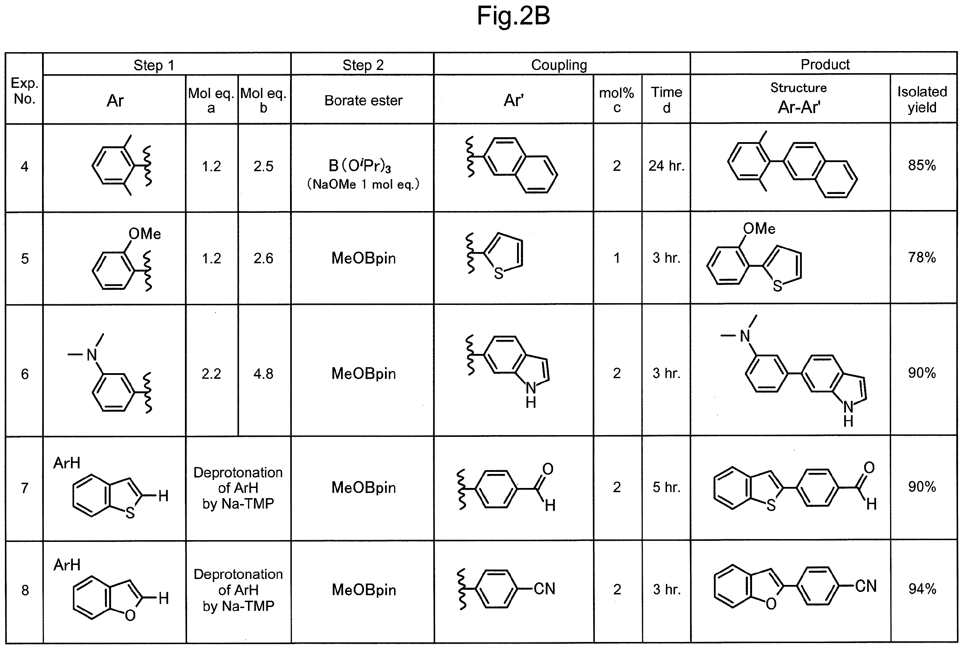

In this example, boronate ester compounds were synthesized through reactions between organic sodium compounds synthesized using the SD and borate ester compounds under synthesis conditions summarized in FIGS. 2A and 2B, and whether or not the obtained boronate ester compounds could be used for Suzuki-Miyaura coupling in which palladium catalysts were used was investigated.

### Experiment No. 1

1.2 molar equivalents of 4-chlorotoluene (0.60 mmol) was reacted with 2.8 molar equivalents of the SD at 30°C for 1 hour in 1.2 ml of hexane to obtain 4-methylphenylsodium. Subsequently, the reaction system was cooled to 0°C, and then 1.2 molar equivalents of pinacol methoxyboronate (MeOBpin) and 0.6 ml of THF were added to the produced 4-methylphenylsodium in this order and a reaction was carried out for 10 minutes to obtain pinacol 4-methylphenylboronate. Subsequently, 0.3 ml of water was added, and then 1.0 molar equivalent of 2-chloronaphthalene (0.5 mmol) was added and a reaction was carried out at 70°C for 3 hours in the presence of 1 mol% of palladium catalyst Pd-PEPPSI (registered trademark)-IPr to obtain 2-(4-methylphenyl)naphthalene as a coupling product. The synthesized 2-(4-methylphenyl)naphthalene was evaluated through ¹H NMR measurement. The yield was calculated as a percentage of an amount of actually obtained 2-(4-methylphenyl)naphthalene relative to an amount of 2-(4-methylphenyl)naphthalene that can be theoretically produced from 2-chloronaphthalene added to the reaction system. The isolation yield was 91%. It can be understood from the above that pinacol 4-methylphenylboronate can be synthesized with a high yield from 4-chlorotoluene through the synthesis of 4-methylphenylsodium, and Suzuki-Miyaura coupling in which pinacol 4-methylphenylboronate is used efficiently progresses, and consequently 2-(4-methylphenyl)naphthalene can be obtained with a high yield as a coupling product.

### Experiment No. 2

1.2 molar equivalents of 3-chlorotoluene (0.58 mmol) was reacted with 2.8 molar equivalents of the SD at 30°C for 1 hour in 1.2 ml of hexane to obtain 3-methylphenylsodium. Subsequently, the reaction system was cooled to 0°C, and then 1.2 molar equivalents of pinacol methoxyboronate (MeOBpin) and 0.6 ml of THF were added to the produced 3-methylphenylsodium in this order and a reaction was carried out for 10 minutes to obtain pinacol 3-methylphenylboronate. Subsequently, 0.3 ml of water was added, and then 1.0 molar equivalent of 2-chloronaphthalene (0.49 mmol) was added and a reaction was carried out at 70°C for 5 hours in the presence of 2 mol% of palladium catalyst Pd-PEPPSI (registered trademark)-IPr to obtain 2-(3-methylphenyl)naphthalene as a coupling product. The isolation yield of the synthesized 2-(3-methylphenyl)naphthalene was 78%. It can be understood from the above that pinacol 3-methylphenylboronate can be synthesized with a high yield from 3-chlorotoluene through the synthesis of 3-methylphenylsodium, and Suzuki-Miyaura coupling in which pinacol 3-methylphenylboronate is used efficiently progresses, and consequently 2-(3-methylphenyl)naphthalene can be obtained with a high yield as a coupling product.

### Experiment No. 3

1.2 molar equivalents of 2-chlorotoluene (0.61 mmol) was reacted with 2.5 molar equivalents of the SD at 30°C for 1 hour in 1.2 ml of hexane to obtain 2-methylphenylsodium. Subsequently, the reaction system was cooled to 0°C, and then 1.2 molar equivalents of pinacol methoxyboronate (MeOBpin) and 0.6 ml of THF were added to the produced 2-methylphenylsodium in this order and a reaction was carried out for 10 minutes to obtain pinacol 2-methylphenylboronate. Subsequently, 0.3 ml of water was added, and then 1.0 molar equivalent of 2-chloronaphthalene (0.5 mmol) was added and a reaction was carried out at 70°C for 4 hours in the presence of 1 mol% of palladium catalyst Pd-PEPPSI (registered trademark)-IPr to obtain 2-(2-methylphenyl)naphthalene as a coupling product. The isolation yield of the synthesized 2-(2-methylphenyl)naphthalene was 90%. It can be understood from the above that pinacol 2-methylphenylboronate can be synthesized with a high yield from 2-chlorotoluene through the synthesis of 2-methylphenylsodium, and Suzuki-Miyaura coupling in which pinacol 2-methylphenylboronate is used efficiently progresses, and consequently 2-(2-methylphenyl)naphthalene can be obtained with a high yield as a coupling product.

### Experiment No. 4

1.2 molar equivalents of 2-chloro-m-xylene (0.61 mmol) was reacted with 2.5 molar equivalents of SD at 30°C for 3 hours in 1.2 ml of hexane to obtain 2,6-dimethylphenylsodium. Subsequently, the reaction system was cooled to 0°C, and then 1.3 molar equivalents of triisopropyl borate (B(OⁱPr)₃: 1.0 molar equivalent of methoxysodium (NaOMe) was added as an additional base) and 0.6 ml of THF were added to the produced 2,6-dimethylphenylsodium in this order and a reaction was carried out for 10 minutes to obtain diisopropyl 2,6-dimethylphenylboronate. Subsequently, 0.3 ml of water was added, and then 1.0 molar equivalent of 2-chloronaphthalene (0.5 mmol) was added and a reaction was carried out at 70°C for 24 hours in the presence of 2 mol% of palladium catalyst Pd-PEPPSI (registered trademark)-IPr to obtain 2-(2,6-dimethylphenyl)naphthalene as a coupling product. The isolation yield of the synthesized 2-(2,6-dimethylphenyl)naphthalene was 85%. It can be understood from the above that diisopropyl 2,6-dimethylphenylboronate can be synthesized with a high yield from 2-chloro-m-xylene through the synthesis of 2,6-dimethylphenylsodium, and Suzuki-Miyaura coupling in which diisopropyl 2,6-dimethylphenylboronate is used efficiently progresses, and consequently 2-(2,6-dimethylphenyl)naphthalene can be obtained with a high yield as a coupling product. It was found that if bulky arylsodium such as 2,6-dimethylphenylsodium is used, B(OⁱPr)₃, B(OMe)₃, or the like could be favorably used as a borate, and the reaction yield was improved as a result of 1 molar equivalent of NaOMe being added as an additional base.

### Experiment No. 5

1.2 molar equivalents of 2-chloroanisole (0.60 mmol) was reacted with 2.6 molar equivalents of SD at 30°C for 1 hour in 1.2 ml of hexane to obtain 2-methoxyphenyl sodium. Subsequently, the reaction system was cooled to 0°C, and then 1.2 molar equivalents of pinacol methoxyboronate (MeOBpin) and 0.6 ml of THF were added to the produced 2-methoxyphenylsodium in this order and a reaction was carried out for 10 minutes to obtain pinacol 2-methoxyphenylboronate. Subsequently, 0.3 ml of water was added, and then 1.0 molar equivalent of 2-chlorothiophene (0.5 mmol) was added and a reaction was carried out at 70°C for 3 hours in the presence of 1 mol% of palladium catalyst Pd-PEPPSI (registered trademark)-IPr to obtain 2-(2-methoxyphenyl)thiophene as a coupling product. The isolation yield of the synthesized 2-(2-methoxyphenyl)thiophene was 78%. It can be understood from the above that pinacol 2-methoxyphenylboronate can be synthesized with a high yield from 2-chloroanisole through the synthesis of 2-methoxyphenylsodium, and Suzuki-Miyaura coupling in which pinacol 2-methoxyphenylboronate is used efficiently progresses, and consequently 2-(2-methoxyphenyl)thiophene can be obtained with a high yield as a coupling product.

### Experiment No. 6

2.2 molar equivalents of 1-chloro-3-(dimethylamino)benzene (0.61 mmol) was reacted with 4.8 molar equivalents of SD at 30°C for 1 hour in 1.2 ml of hexane to obtain 3-(dimethylamino)phenylsodium. Subsequently, the reaction system was cooled to 0°C, and then 1.2 molar equivalents of pinacol methoxyboronate (MeOBpin) and 0.6 ml of THF were added to the produced 3-(dimethylamino)phenylsodium in this order and a reaction was carried out for 10 minutes to obtain pinacol 3-(dimethylamino)phenylboronate. Subsequently, 0.3 ml of water was added, and then 1.0 molar equivalent of 6-chloroindole (0.28 mmol) was added and a reaction was carried out at 70°C for 3 hours in the presence of 2 mol% of palladium catalyst Pd-PEPPSI (registered trademark)-IPr to obtain 6-(3-(dimethylamino)phenyl)indole as a coupling product. The isolation yield of the synthesized 6-(3-dimethylaminophenyl)indole was 90%. It can be understood from the above that pinacol 3-(dimethylamino)phenylboronate can be synthesized with a high yield from 1-chloro-3-(dimethylamino)benzene through the synthesis of 3-(dimethylamino)phenylsodium, and Suzuki-Miyaura coupling in which pinacol 3-(dimethylamino)phenylboronate is used efficiently progresses, and consequently 6-(3-(dimethylamino)phenyl)indole can be obtained with a high yield as a coupling product.

### Experiment No. 7

1.64 mmol of SD was added to 0.7 ml of hexane, 0.73 mmol of chlorobenzene was dripped, and a reaction was carried out at 30°C for 30 minutes to prepare phenylsodium. 0.76 mmol of 2,2,6,6-tetramethylpiperidine was added to the reaction system and a reaction was carried out at 30°C for 30 minutes to obtain Na-TMP Benzothiophene (0.60 mmol) was added to the reaction system and a reaction was carried out at 30°C for 30 minutes to perform deprotonation and obtain 2-benzothiophenylsodium. Subsequently, the reaction system was cooled to 0°C, and then 1.2 molar equivalents of pinacol methoxyboronate (MeOBpin) and 0.6 ml of THF were added to the produced 2-benzothiophenylsodium in this order and a reaction was carried out for 10 minutes to obtain pinacol 2-benzothiophenylboronate. Subsequently, 0.3 ml of water was added, and then 1.0 molar equivalent of 4-chlorobenzaldehyde (0.5 mmol) was added and a reaction was ßcarried out at 70°C for 5 hours in the presence of 2 mol% of palladium catalyst Pd-PEPPSI (registered trademark)-IPr to obtain 4-(2-benzothiophenyl)benzaldehyde as a coupling product. The isolation yield of the synthesized 4-(2-benzothiophenyl)benzaldehyde was 90%. It can be understood from the above that pinacol 2-benzothiophenylboronate can be synthesized with a high yield from 2-chloro-benzothiophene through the synthesis of 2-benzothiophenyl sodium, and Suzuki-Miyaura coupling in which pinacol 2-benzothiophenylboronate is used efficiently progresses, and consequently 4-(2-benzothiophenyl)benzaldehyde can be obtained with a high yield as a coupling product.

### Experiment No. 8

1.60 mmol of SD was added to 0.7 ml of hexane, 0.69 mmol of chlorobenzene was dripped, and a reaction was carried out at 30°C for 30 minutes to prepare phenylsodium. 0.75 mmol of 2,2,6,6-tetramethylpiperidine was added to the reaction system and a reaction was carried out at 30°C for 30 minutes to obtain Na-TMP Benzofuran (0.60 mmol) was added to the reaction system and a reaction was carried out at 30°C for 30 minutes to perform deprotonation and obtain 2-benzofuranylsodium. Subsequently, the reaction system was cooled to 0°C, and then 1.2 molar equivalents of pinacol methoxyboronate (MeOBpin) and 0.6 ml of THF were added to the produced 2-benzofuranylsodium in this order and a reaction was carried out for 10 minutes to obtain pinacol 2-benzofuranylboronate. Subsequently, 0.3 ml of water was added, and then 1.0 molar equivalent of 4-chlorobenzonitrile (0.5 mmol) was added and a reaction was carried out at 70°C for 3 hours in the presence of 2 mol% of palladium catalyst Pd-PEPPSI (registered trademark)-IPr to obtain 4-(2-benzofuranyl)benzonitrile as a coupling product. The isolation yield of the synthesized 4-(2-benzofuranyl)benzonitrile was 94%. It can be understood from the above that pinacol 2-benzofuranylboronate can be synthesized with a high yield from 2-chloro-benzofuran through the synthesis of 2-benzofuranylsodium, and Suzuki-Miyaura coupling in which pinacol 2-benzofuranylboronate is used efficiently progresses, and consequently 4-(2-benzofuranyl)benzonitrile can be obtained with a high yield as a coupling product.

### Example 3

### Synthesis of sodium salt of boronate ester compound through reaction between organic sodium compound synthesized using SD and borate ester compound, and Suzuki-Miyaura coupling

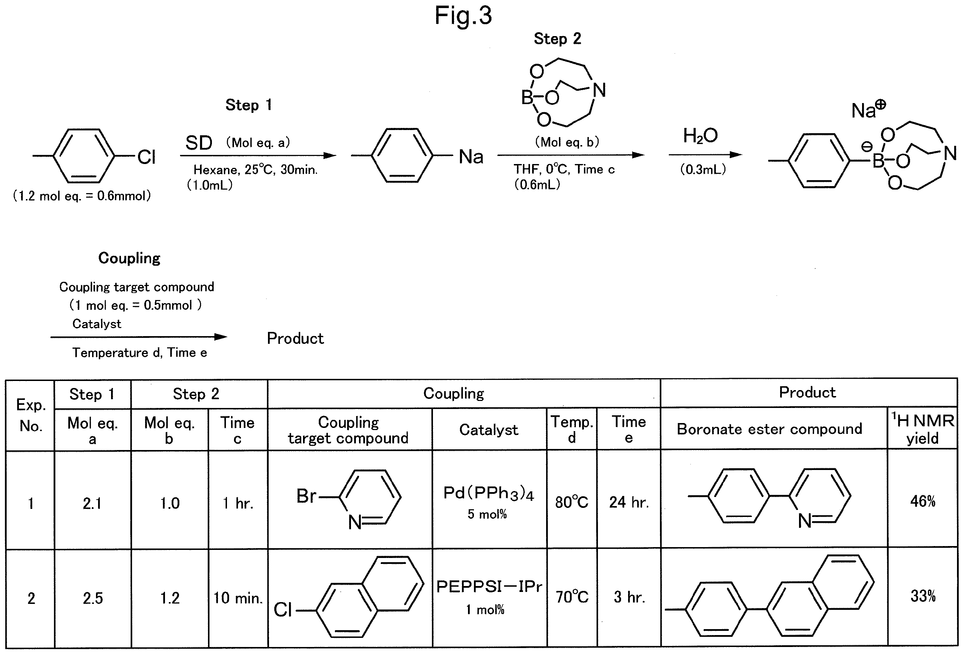

In this example, sodium salts of boronate ester compounds were synthesized through reactions between organic sodium compounds synthesized using the SD and borate ester compounds under synthesis conditions summarized in FIG. 3, and whether or not the obtained sodium salts of boronate ester compounds could be used for Suzuki-Miyaura coupling in which palladium catalysts were used was investigated.

### Experiment No. 1

1.2 molar equivalents of 4-chlorotoluene (0.6 mmol) was reacted with 2.1 molar equivalents of the SD at 25°C for 30 minutes in 1.0 ml of hexane to obtain 4-methylphenylsodium. Subsequently, the reaction system was cooled to 0°C, and then 1.0 molar equivalent of triethanolamine borate and 0.6 ml of THF were added to the produced 4-methylphenylsodium in this order and a reaction was carried out for 1 hour to obtain a sodium salt of triethanolamine 4-methylphenylborate. Subsequently, 0.3 ml of water was added, and then 1.0 molar equivalent of 2-bromopyridine (0.5 mmol) was added and a reaction was carried out at 80°C for 24 hours in the presence of 5 mol% of palladium catalyst Pd(PPh₃)₄ to obtain 2-(4-methylphenyl)pyridine as a coupling product. The synthesized 2-(4-methylphenyl)pyridine was evaluated through 1H NMR measurement. The yield was calculated as a percentage of an amount of actually obtained 2-(4-methylphenyl)pyridine relative to an amount of 2-(4-methylphenyl)pyridine that can be theoretically produced from 2-bromopyridine added to the reaction system. The yield was 46%. It can be understood from the above that the sodium salt of triethanolamine 4-methylphenylborate can be synthesized with a high yield from 4-chlorotoluene through the synthesis of 4-methylphenylsodium, and Suzuki-Miyaura coupling in which the sodium salt of triethanolamine 4-methylphenylborate is used efficiently progresses, and consequently 2-(4-methylphenyl)pyridine can be obtained with a high yield as a coupling product.

### Experiment No. 2

1.2 molar equivalents of 4-chlorotoluene (0.6 mmol) was reacted with 2.5 molar equivalents of SD at 25°C for 30 minutes in 1.0 ml of hexane to obtain 4-methylphenylsodium. Subsequently, the reaction system was cooled to 0°C, and then 1.2 molar equivalents of triethanolamine borate and 0.6 ml of THF were added to the produced 4-methylphenylsodium in this order and a reaction was carried out for 10 minutes to obtain a sodium salt of triethanolamine 4-methylphenylborate. Subsequently, 0.3 ml of water was added, and then 1.0 molar equivalent of 2-chloronaphthalene (0.5 mmol) was added and a reaction was carried out at 70°C for 3 hours in the presence of 1 mol% of palladium catalyst PEPPSI-IPr to obtain 2-(4-methylphenyl)naphthalene as a coupling product. The synthesized 2-(4-methylphenyl)naphthalene was evaluated through 1H NMR measurement. The yield was calculated as a percentage of an amount of actually obtained 2-(4-methylphenyl)naphthalene relative to an amount of 2-(4-methylphenyl)naphthalene that can be theoretically produced from 2-chloronaphthalene added to the reaction system. The yield was 33%. It can be understood from the above that the sodium salt of triethanolamine 4-methylphenylborate can be synthesized with a high yield from 4-chlorotoluene through the synthesis of 4-methylphenylsodium, and Suzuki-Miyaura coupling in which the sodium salt of triethanolamine 4-methylphenylborate is used efficiently progresses, and consequently 2-(4-methylphenyl)naphthalene can be obtained with a high yield as a coupling product.

### Example 4

### Synthesis of boronate ester compound through reaction between organic sodium compound synthesized using SD and borate ester compound that does not have ring structure, and Suzuki-Miyaura coupling

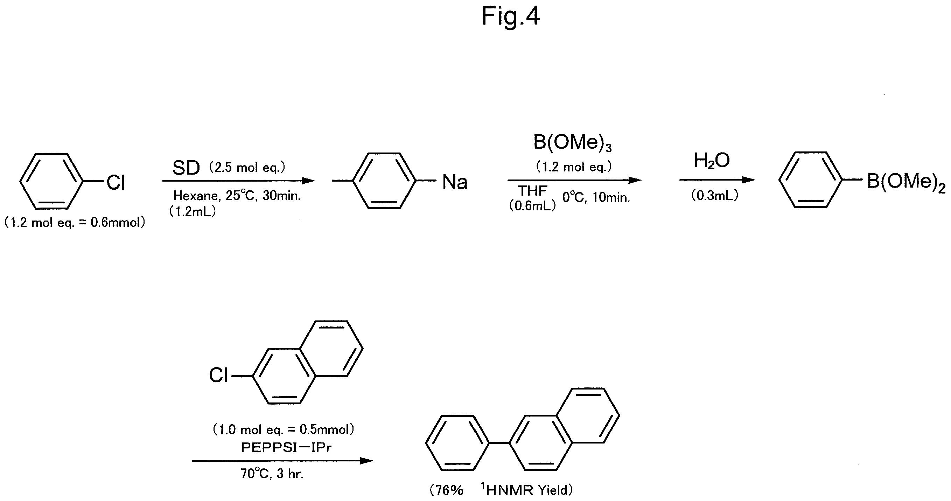

In this example, a boronate ester compound was synthesized through a reaction between an organic sodium compound synthesized using the SD and a borate ester compound that does not have a ring structure under synthesis conditions summarized in FIG. 4, and whether or not the obtained boronate ester compound can be used for Suzuki-Miyaura coupling in which a palladium catalyst was used was investigated.

1.2 molar equivalents of chlorobenzene (0.6 mmol) was reacted with 2.5 molar equivalents of the SD at 25°C for 30 minutes in 1.2 ml of hexane. Subsequently, the reaction system was cooled to 0°C, and then 1.2 molar equivalents of trimethyl borate and 0.6 ml of THF were added to produced phenylsodium in this order and a reaction was carried out for 10 minutes to obtain dimethyl phenylboronate. Subsequently, 0.3 ml of water was added, and then 1.0 molar equivalent of 2-chloronaphthalene (0.5 mmol) was added and a reaction was carried out at 70°C for 3 hours in the presence of 1 mol% of palladium catalyst PEPPSI-IPr to obtain 2-phenylnaphthalene as a coupling product. The synthesized 2-phenylnaphthalene was evaluated through 1H NMR measurement. The yield was calculated as a percentage of an amount of actually obtained 2-phenylnaphthalene relative to an amount of 2-phenylnaphthalene that can be theoretically produced from 2-chloronaphthalene added to the reaction system. The yield was 76%. It can be understood from the above that a boronate ester compound can be synthesized with a high yield from a borate ester compound that does not have a ring structure, and consequently Suzuki-Miyaura coupling efficiently progresses and a coupling product can be obtained with a high yield.

### Example 5

### Synthesis of sodium salt of boronate ester compound through reaction between organic sodium compound synthesized using SD and borate ester compound

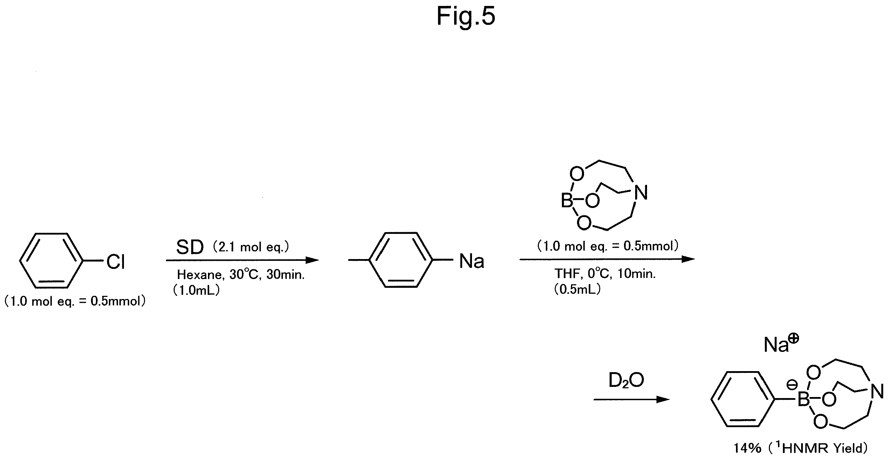

In this example, the synthesis of a sodium salt of a boronate ester compound through a reaction between an organic sodium compound synthesized using the SD and a borate ester compound under synthesis conditions summarized in FIG. 5 was investigated.

1.0 molar equivalent of chlorobenzene (0.5 mmol) was reacted with 2.1 molar equivalents of SD at 30°C for 30 minutes in 1.0 ml of hexane. Subsequently, the reaction system was cooled to 0°C, and then 1.0 molar equivalent of triethanolamine borate (0.5 mmol) and 0.5 ml of THF were added to produced phenylsodium in this order and a reaction was carried out for 10 minutes, and then heavy water was added to obtain a sodium salt of triethanolamine phenylborate. The yield was calculated as a percentage of an amount of the actually obtained sodium salt of triethanolamine phenylborate relative to an amount of the sodium salt of triethanolamine phenylborate that can be theoretically produced from triethanolamine borate added to the reaction system. The yield was 14%. It can be understood from the above that a sodium salt of a boronate ester compound such as triethanolamine phenylborate, which is a novel compound, can be obtained. The sodium salt of a boronate ester compound is a useful compound that can be favorably used for Suzuki-Miyaura coupling and the like.

### Industrial Applicability

The present invention is useful in all technical fields in which the method for synthesizing a boronate ester compound, the method for synthesizing a sodium salt of a boronate ester compound, boronate ester compounds and sodium salts of boronate ester compounds synthesized using the synthesis methods are used. In particular, the present invention can be favorably used as an intermediate product in a coupling reaction such as Suzuki-Miyaura coupling, and is particularly useful in the fields of manufacture of medicines, agricultural chemicals, and electronic materials.

## Claims

1. A method for synthesizing a boronate ester compound, comprising:
reacting, in a reaction solvent, an organic chloride represented by General Formula I^{a} (R¹-Cl), where R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, with a dispersion product obtained by dispersing sodium in a dispersion solvent to obtain an organic sodium compound represented by General Formula II (R¹-Na), where R¹ is the same as R¹ in General Formula I^{a}; and
reacting the obtained organic sodium compound with a borate ester compound represented by General Formula III, 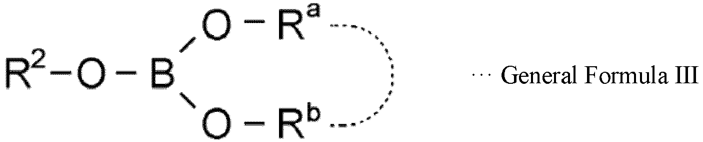 where R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, R^{a} and R^{b} are each, independently of each other, an aliphatic hydrocarbon group or an aromatic hydrocarbon group, which optionally includes a substituent that does not react with sodium, and R^{a} and R^{b} are optionally bonded to each other forming a ring together with a boron atom, to obtain a boronate ester compound represented by General Formula IV, 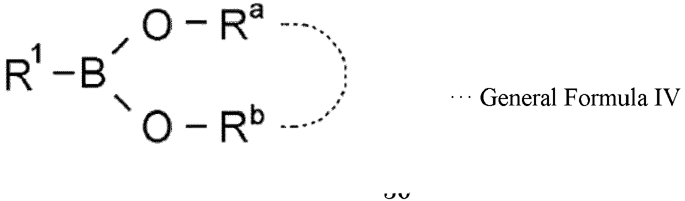 where R¹ is the same as R¹ in General Formula I^{a}, and R^{a} and R^{b} are the same as those in General Formula III.

2. The method for synthesizing a boronate ester compound according to claim 1,
wherein the borate ester compound is a compound represented by General Formula V below, 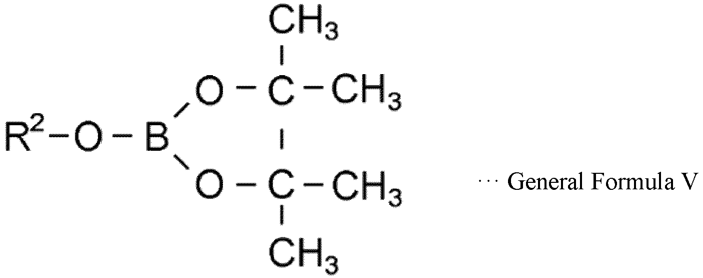 where R² is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium.

3. The method for synthesizing a boronate ester compound according to claim 1 or 2,
wherein a molar ratio of the dispersion product obtained by dispersing sodium in a dispersion solvent to the organic chloride is at least 2.

4. A sodium salt of a boronate ester compound represented by General Formula VI, 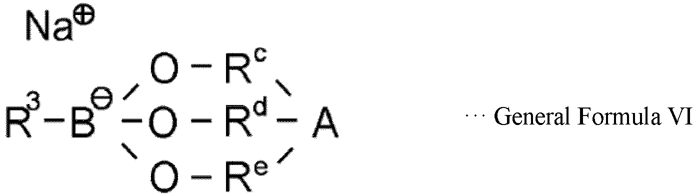 where A is an atom selected from a nitrogen atom, a carbon atom, a silicon atom, and a phosphorus atom, R³ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, R^{c}, R^{d}, and R^{e} are each, independently of each other, an aliphatic hydrocarbon group that optionally includes a substituent that does not react with sodium, and R^{c}, R^{d}, and R^{e} are bonded to the A and a boron atom, forming a ring.

5. A method for synthesizing a sodium salt of a boronate ester compound, comprising:
reacting, in a reaction solvent, an organic chloride represented by General Formula I^{a} (R¹-Cl), where R¹ is an aliphatic hydrocarbon group, an alicyclic hydrocarbon group, an alicyclic heterocyclic group, an aromatic hydrocarbon group, or an aromatic heterocyclic group, which optionally includes a substituent that does not react with sodium, with a dispersion product obtained by dispersing sodium in a dispersion solvent to obtain an organic sodium compound represented by General Formula II (R¹-Na), where R¹ is the same as R¹ in General Formula I^{a}; and
reacting the obtained organic sodium compound with a borate ester compound represented by General Formula VII, 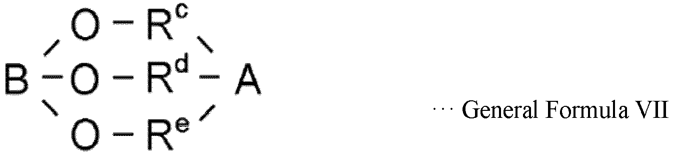 where A is an atom selected from a nitrogen atom, a carbon atom, a silicon atom, and a phosphorus atom, R^{c}, R^{d}, and R^{e} are each, independently of each other, an aliphatic hydrocarbon group that optionally includes a substituent that does not react with sodium, and R^{c}, R^{d}, and R^{e} are bonded to the A and a boron atom, forming a ring, to obtain a boronate ester compound represented by General Formula VI, 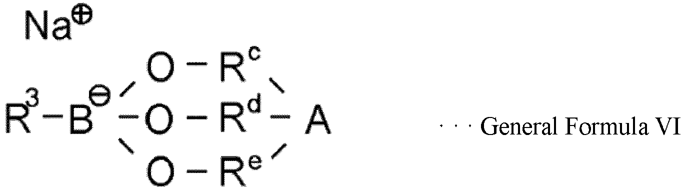 where A is the same as A in General Formula VII, R³ is the same as R¹ in General Formula I^{a}, and R^{c}, R^{d}, and R^{e} are the same as R^{c}, R^{d}, and R^{e} in General Formula VII.

6. The method for synthesizing a sodium salt of a boronate ester compound according to claim 5,
wherein a molar ratio of the dispersion product obtained by dispersing sodium in a dispersion solvent to the organic chloride is at least 2.
